Europäisches Patentamt

European Patent Office

Office européen des brevets

(19)

(11) Veröffentlichungsnummer: **0 331 910 B1**

(12) **EUROPÄISCHE PATENTSCHRIFT**

(45) Veröffentlichungstag der Patentschrift: **02.12.92**

(51) Int. Cl.⁵: **B60J 7/053**

(21) Anmeldenummer: **89101994.5**

(22) Anmeldetag: **06.02.89**

(54) **Lüfterdach für Kraftfahrzeuge.**

(30) Priorität: **10.03.88 DE 3807961**
**02.12.88 DE 3840694**

(43) Veröffentlichungstag der Anmeldung:
**13.09.89 Patentblatt 89/37**

(45) Bekanntmachung des Hinweises auf die
Patenterteilung:
**02.12.92 Patentblatt 92/49**

(84) Benannte Vertragsstaaten:
**DE ES FR GB IT NL SE**

(56) Entgegenhaltungen:
**DE-A- 1 630 287     DE-A- 3 149 977**
**DE-A- 3 311 452     DE-C- 2 454 723**
**DE-C- 3 532 318     DE-U- 8 119 662**
**FR-A- 2 481 203**

(73) Patentinhaber: **Webasto AG Fahrzeugtechnik**
**Kraillingerstrasse 5**
**W-8035 Stockdorf(DE)**

(72) Erfinder: **Schreiter, Thomas**
**Hochmeierstrasse 6**
**W-8000 München 70(DE)**
Erfinder: **Fürst, Arpad**
**Geschwister Scholl Ring 35**
**W-8034 Germering(DE)**
Erfinder: **Paetz, Werner**
**Hittostrasse 1o**
**W-8050 Freising(DE)**

EP 0 331 910 B1

Rank Xerox (UK) Business Services

## Beschreibung

Die Erfindung bezieht sich auf ein Lüfterdach für Kraftfahrzeuge mit einem in einer festen Dachhaut ausgebildeten Dachausschnitt, der mittels eines einzigen Deckels verschließbar ist, der durch Verschwenken um eine an oder nahe seiner Hinterkante liegende Schwenkachse in eine Lüfterstellung schwenkbar ist, in welcher die Deckelvorderkante in Abstand unterhalb der festen Dachfläche liegt, während die Deckelhinterkante mindestens näherungsweise in Dachhöhe gehalten wird.

Bei einem bekannten Lüfterdach dieser Art (DE-U-8 119 662) ist der Dachausschnitt im hinteren Teil der festen Dachhaut ausgebildet, und der Deckel läßt sich zum Freilegen der Dachöffnung herausnehmen. Das bekannte Lüfterdach vermeidet zwar auch in der Lüfterstellung über die feste Dachhaut nach oben vorstehende Teile, was insbesondere bei hohen Fahrgeschwindigkeiten aerodynamisch günstig ist. Der beim Schwenken des Deckels in die Lüfterstellung im - bezogen auf die Fahrzeuglängsrichtung - mittleren Teil des Daches ausgebildete Lüftungsspalt läßt jedoch lüftungstechnisch zu wünschen übrig. Der Grad der Freilegung des Dachausschnittes kann nicht dosiert werden. Des weiteren wird selbst bei abgenommenem Deckel dem Fahrer und dem Beifahrer kein capioletähnliches Fahrgefühl vermittelt. Die letztgenannten Nachteile lassen sich zwar teilweise ausräumen, wenn in ebenfalls bekannter Weise (DE-A-31 49 977) vor dem in eine Lüfterstellung schwenkbaren Deckel ein zweiter Deckel angeordnet wird, der nach Verschwenken des hinteren Deckels in die Lüfterstellung nach hinten über den hinteren Deckel geschoben werden kann, um einen über dem Fahrer und dem Beifahrer befindlichen Teil des Dachausschnittes freizulegen. Eine solche Zweideckel-Lösung erfordert jedoch einen aufwendigen und anfälligen Antriebs- und Verstellmechanismus. Außerdem kann der Dachausschnitt nur zu weniger als der Hälfte seiner Gesamtabmessung geöffnet werden.

Herkömmliche Schiebehebedächer mit wahlweise ausstellbarem oder nach hinten unter die feste Dachhaut schiebbarem Deckel (DE-C-2 454 723) gestatten es zwar, den Dachausschnitt ganz oder nahezu ganz freizulegen, und das Öffnen des Daches läßt sich auch beliebig dosieren. Wenn der Deckel jedoch in die Lüfterstellung hochgeschwenkt ist, wird das aerodynamische Verhalten des Fahrzeuges insbesondere bei hohen Fahrgeschwindigkeiten nachteilig beeinflußt. Außerdem lassen auch in diesem Falle die Lüftungseigenschaften zu wünschen übrig. Aerodynamisch noch ungünstiger sind sogenannte Spoilerdächer, bei denen der Deckel nach Ausschwenken in eine Lüfterstellung oberhalb der festen Dachhaut nach hinten geschoben werden kann (DE-A-3 311 452).

Der im Anspruch 1 angegebenen Erfindung liegt die Aufgabe zugrunde, ein Lüfterdach der eingangs genannten Art zu schaffen, das bei Beibehaltung von günstigen aerodynamischen Eigenschaften vor allem lüftungstechnisch verbessert ist.

Diese Aufgabe wird erfindungsgemäß dadurch gelöst, daß der Dachausschnitt im vorderen Teil der festen Dachhaut ausgebildet ist, sowie daß der Deckel ausgehend von der Lüfterstellung mit seiner Hinterkante unter die feste Dachfläche absenkbar und als Ganzes nach hinten unter die Dachhaut in eine den Dachausschnitt mindestens teilweise freigebende Offenstellung verschiebbar ist.

Bei dem Lüfterdach nach der Erfindung wird der Lüftungsspalt nahe dem vorderen Ende der festen Dachhaut gebildet, was lüftungstechnisch vorteilig für eine Enteisung und die Beseitigung von Beschlag auf der Frontscheibe ist. Fahrer und Beifahrer werden durch den in der Lüfterstellung des Deckels entstehenden Luftzug nicht belästigt. Durch Verschieben des Deckels kann der Grad der Freilegung des Dachausschnittes beliebig dosiert werden. Bei voll zurückgeschobenem Deckel wird dem Fahrer ein cabrioletähnliches Fahrgefühl vermittelt. In allen möglichen Deckelstellungen ragen praktisch keine Deckelteile über die Dachfläche nach oben vor, was ein aerodynamisch günstiges Fahrverhalten insbesondere bei hohen Fahrgeschwindigkeiten mit sich bringt. Im Gegensatz zu einem Spoilerdach bleibt das herkömmliche Erscheinungsbild des Fahrzeuges erhalten. Aufgrund der Verwendung eines einzigen Deckels kommt das vorliegende Lüfterdach mit einem relativ einfachen Antriebs- und Verstellmechanismus aus.

Beim Absenken der Deckelhinterkante wird die zuvor in die Lüfterstellung abgesenkte Deckelvorderkante vorzugsweise in eine Zwischenstellung zwischen der Lüfterstellung und der Schließstellung angehoben, was insbesondere im Hinblick auf die Kopffreiheit günstig ist.

In weiterer Ausgestaltung der Erfindung trägt der Deckel eine ringsum vorspringende feste Wasserrinne, die in der Deckelschließstellung den Randspalt zwischen dem Deckelaußenrand und dem Rand des Dachausschnittes untergreift. Dadurch kann die bei herkömmlichen Schiebedächern notwendige, vom Deckel getrennte, mit dessen Schiebebewegung aber gekoppelte hintere Wasserrinne entfallen. Vorzugsweise ist der Deckel ferner mit einer ringsumlaufenden Dichtung oder Dichtfläche versehen, deren Abmessungen größer als die betreffenden Abmessungen des Dachausschnittes sind, wobei der Deckel zur Abdichtung in der Schließstellung in lotrechter Richtung zweckmäßig von unten gegen den Rand des Dachausschnittes angepreßt wird. Dies führt zu einer zuverlässigen Abdichtung mit zunehmender Dichtwirkung bei erhöhter Fahrgeschwindigkeit. Ein Herausziehen des Deckels unter dem Einfluß des Fahrtwindes ist damit ausgeschlossen. Das Lüfterdach bietet ferner hohe Sicherheit gegen ein Herausdrücken des Deckels beispielsweise bei Unfällen oder bei einem Versuch, über das Dach in das Fahrzeug einzubrechen. Auch größere Toleranzen der Deckelaußenabmessungen und/oder der lichten Abmessungen des Dachausschnittes verhindern eine einwandfreie Abdichtung ebenso wenig wie eine Wölbung der Deckelvorderkante. Der Dichtspalt selbst kann vergleichsweise eng gehalten werden.

Unterhalb des an den Dachausschnitt nach hinten angrenzenden Teils der festen Dachhaut kann zweckmäßig ein absenkbarer starrer Himmel angeordnet sein, der vorzugsweise im Bereich seines hinteren Endes mit einem dachfesten Teil schwenkbar verbunden und im Bereich seines vorderen Endes derart nach oben federnd vorgespannt ist, daß er sich gegen den Deckel in allen Deckelstellungen von unten federnd nachgiebig anlegt. In der Deckelschließstellung bewegt sich ein solcher absenkbarer starrer Himmel nach oben und vergrößert damit die Kopffreiheit für Fondpassagiere.

In weiterer Ausgestaltung der Erfindung ist der Deckel mit einem Deckelverstellmechanismus verbunden, der zu beiden Seiten des Dachausschnittes unterhalb der festen Dachhaut angeordnet ist. Dadurch geht keine Kopffreiheit für den Deckelverstellmechanismus verloren. Der Deckelverstellmechanismus selbst ist an geschützter Stelle untergebracht. Ein besonders einfacher Deckelverstellmechanismus wird erhalten, wenn auf beiden Dachseiten jeweils eine Kulisse sitzt und die Kulissen in Fahrzeuglängsrichtung entlang dachfest angeordneten Führungsschienen verschiebbar geführt und mit dem Deckel jeweils über mindestens einen vorderen und einen hinteren Deckelanschlußbolzen verbunden sind, die in Kulissenbahnen der Kulisse eingreifen. Durch entsprechende Ausbildung der Kulissenbahnen kann für einen relativ langen und damit gut abstufbaren Betätigungsweg für die Lüftungsfunktion gesorgt werden. Die Absenkwege lassen sich klein halten.

Zur Vormontierbarkeit des Lüfterdaches trägt bei, wenn die beiden Führungsschienen in ihrem vorderen und ihrem hinteren Bereich über Querstreben untereinander verbunden sind. Dabei kann die vordere Querstrebe als Windleitfläche ausgestaltet werden, während mit der hinteren Querstrebe der absenkbare starre Himmel, z.B. über Scharniere, schwenkbar verbunden sein kann. Die Führungsschienen können zweckmäßig aus Strangpreßprofilen gefertigt sein, und sie bedürfen in diesem Fall allenfalls geringer mechanischer Nachbearbeitung. Für die Betätigung des Lüfterdaches reicht ein einziger Antrieb aus, der zweckmäßig mit den Kulissen über jeweils ein Antriebskabel, vorzugsweise in Form eines Gewindekabels, verbunden ist. An den Kulissen drehbar gelagerte Führungsrollen, die in einem in Fahrzeuglängsrichtung verlaufenden Führungskanal der betreffenden Führungsschiene geführt sind, sorgen für eine robuste und leichtgängige Lagerung der Kulissen gegenüber den Führungsschienen.

Die Kulissenbahnen können derart geformt sein, daß bei einem von der Deckelschließstellung ausgehenden Zurückschieben der Kulissen der Deckel zunächst in die Lüfterstellung gebracht und dann mit seiner Hinterkante abgesenkt und nach hinten mitgenommen wird. Entsprechend einer abgewandelten Ausführungsform der Erfindung kann der Deckel aber auch nach Absenken seiner Vorderkante mit seinem vorderen Ende unter den vor dem Dachausschnitt liegenden Teil der festen Dachhaut geschoben werden. In einem solchen Fall sind die Kulissenbahnen zweckmäßig derart geformt, daß der Deckel bei einem von der Deckelschließstellung ausgehenden Vorschieben der Kulissen zunächst mit seiner Vorderkante abgesenkt und dann nach vorne mitgenommen sowie bei einem von der Deckelschließstellung ausgehenden Zurückschieben der Kulissen mit Vorder- und Hinterkante abgesenkt und dann nach hinten mitgenommen wird.

Entsprechend einer weiteren Ausgestaltung der Erfindung ist eine Arretiervorrichtung vorgesehen, welche den Deckel während des Verschwenkens an einer Verschiebebewegung hindert und für ein Verschieben nach hinten erst freigibt, wenn die Deckelhinterkante in die für diese Verschiebebewegung erforderliche Lage abgesenkt ist.

Vorzugsweise sind seitliche Blenden vorgesehen, welche den zu beiden Seiten des Dachausschnittes angeordneten Deckelverstellmechanismus von unten abdecken und die zugleich Wasserrinnen bilden können, welche die seitlichen Teile der ringsum laufenden Wasserrinne des Deckels untergreifen und mit Wasserabläufen versehen sind. An der Unterseite des Deckels kann eine mit diesem mittig fest verbundene, von der Befestigungsstelle seitlich abstehende, elastische Deckelinnenverkleidung angeordnet sein, die gegen dachfeste seitliche Verkleidungsteile, insbesondere seitlichen Blenden, federnd nachgiebig angedrückt ist.

Vorzugsweise ist ferner im Bereich des vorderen Randes des Dachausschnittes eine beweglich gelagerte vordere Blende angeordnet, die zugleich als Prallschutz ausgebildet und nach oben federnd vorgespannt ist und die bei zurückgeschobenem Deckel auch die Funktion eines Windabweisers übernimmt.

Das erläuterte Lüfterdach kommt ohne festen Blech- oder Kunststoffrahmen aus, wodurch Gewicht gespart und zusätzliche Kopffreiheit gewonnen wird. Der Dachausschnitt kann relativ groß gewählt werden, und der Deckel selbst läßt sich wiederum im Interesse der Kopffreiheit dünn halten. Das erfindungsgemäße Lüfterdach ist baukastenfähig und als Baueinheit weitgehend vormontierbar. Die Montage und die Höheneinstellung könne in einem Arbeitsgang erfolgen. Auch eine automatische Montage des Daches ist möglich.

In weiterer Ausgestaltung kann auch ein fester Dachhimmel vorgesehen sein, der die feste Dachhaut mindestens in einem vor dem Dachausschnitt liegenden Bereich untergreift. Dieser feste Dachhimmel erstreckt sich im Bereich des vorderen Randes des Dachausschnittes nach hinten bis unter den vorderen Teil des in der Schließstellung befindlichen Deckels, und er ist mit mindestens einem Lüftungsgitter versehen. Mit dem Lüftungsgitter läßt sich die Luftströmung, die bei in Lüfterstellung stehendem Deckel ausgebildet wird, gezielt führen, um einerseits eine hohe Lüftungswirkung zu erzielen, andererseits aber störende Windgeräusche zu vermeiden. Vom Fahrgastraum aus wird kein Spalt zwischen der Deckelvorderkante und dem festen Dachhimmel bzw. dem vorderen Rand des Dachausschnittes sichtbar. Damit wird ein auch vom Fahrzeuginnenraum her in allen Deckelstellungen besonders ansprechendes Aussehen erreicht.

Wenn im Bereich des vorderen Randes des Dachausschnittes ein Windabweiser angeordnet ist, der in Abhängigkeit von der Deckelverschiebebewegung zwischen einer Ruhe- und einer Arbeitsstellung verstellbar ist, wird dabei die Ausbildung vorzugsweise so getroffen, daß der feste Dachhimmel auch den Windabweiser untergreift. Der Windabweiser bleibt dabei vom Fahrgastraum aus unsichtbar. In der Deckelschließstellung, der Deckellüfterstellung und Zwischenstellungen zwischen diesen beiden Stellungen befindet sich der Windabweiser geschützt zwischen dem Deckel und dem festen Dachhimmel. Zweckmäßig sitzt das Lüftungsgitter in dem Teil des festen Dachhimmels, welcher den vor dem vorderen Rand des Dachausschnittes befindlichen Teil der festen Dachfläche untergreift, wobei das Lüftungsgitter bei Vorhandensein eines Windabweisers vorzugsweise vor diesem angeordnet ist. Dadurch wird jede störende Beeinflussung des Entlüftungs-Luftstromes durch den Windabweiser und/oder das vordere Ende des in die Lüftungsstellung gebrachten Deckels verhindert.

Das Lüftungsgitter kann mindestens einen im wesentlichen lotrecht verlaufenden oder nach vorne konvex gekrümmten Luftführungskanal bilden, und es verläuft zweckmäßig parallel zum vorderen Rand des Dachausschnittes über eine Strecke, die mindestens 75 % der Breite des Dachausschnittes entspricht.

Wenn der Deckel aus durchsichtigem oder durchscheinendem Werkstoff besteht, es sich also um ein sogenanntes Glasdach handelt, ist vorteilhaft eine Schiebehimmel vorgesehen, der unterhalb des Deckels ausgehend von einer Schließstellung, in welcher er eine unterhalb des Dachausschnittes liegende Öffnung eines Dachrahmens abdeckt, nach hinten in eine Offenstellung verschiebbar ist, in welcher er diese Öffnung mindestens teilweise freigibt.

Die Begriffe "vorne" und "hinten" beziehen sich vorliegend auf die Vorwärtsfahrtrichtung des Kraftfahrzeuges, in welches das Dach eingebaut ist.

Ausführungsbeispiele der Erfindung sind im folgenden anhand der Zeichnung näher erläutert. Dabei zeigen:

Fig. 1
eine schematische perspektivische Teilaußenansicht eines mit dem Lüfterdach versehenen Kraftfahrzeugs,

Fig. 2
eine auseinandergezogene perspektivische Darstellung der wesentlichen Bauteile und Baugruppen des Lüfterdaches,

Fign. 3 bis 6
Längsschnitte durch das Lüfterdach bei verschiedenen Stellungen des Deckels,

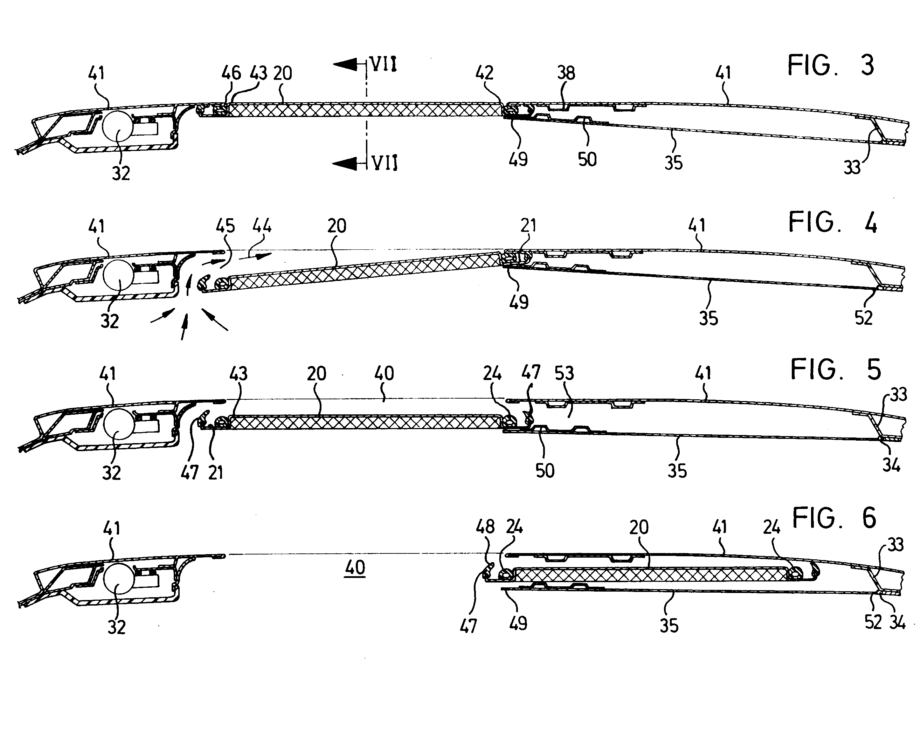

Fign. 7 und 8
Querschnitte entlang der Linie VII-VII der Fig. 3 für die eine Dachseite,

Fign. 9 bis 11
Längsschnitte durch das Lüfterdach, welche den Deckelverstellmechanismus in unterschiedlichen Stellungen erkennen lassen,

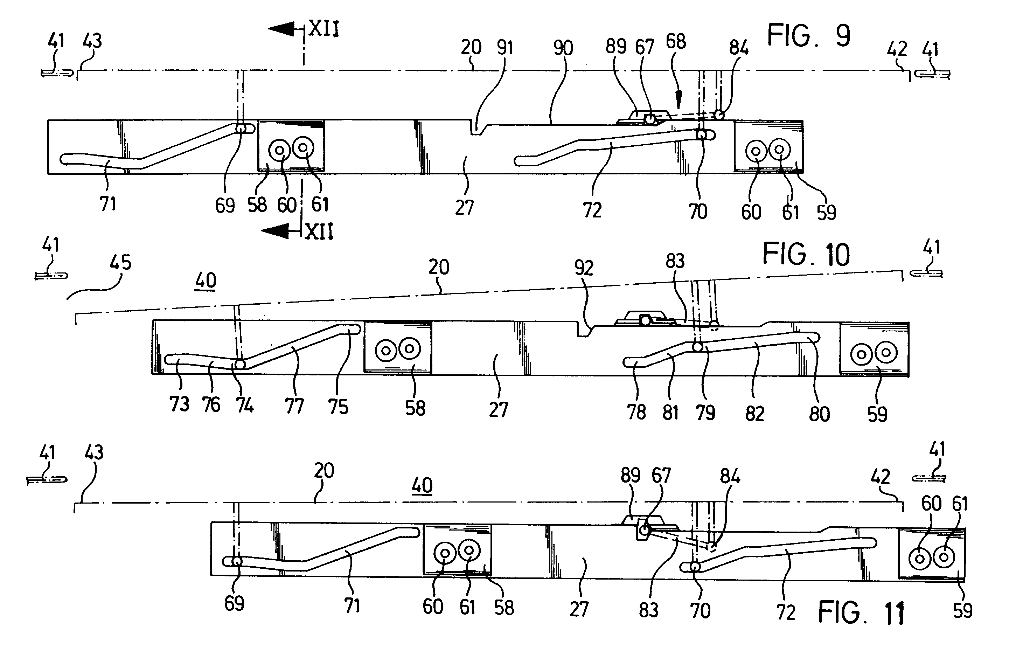

Fig. 12
einen Querschnitt entlang der Linie XII-XII der Fig. 9,

Fig. 13
in größerem Maßstab einen Längsschnitt im Bereich der Arretierung,

Fign. 14 bis 17
in größerem Maßstab einen Längsschnitt im vorderen Dachbereich bei verschiedenen Stellungen des Deckels und einer verstellbaren vorderen Blende,

Fign. 18 bis 22
schematische Längsschnitte durch ein Lüfterdach gemäß einer abgewandelten Ausführungsform,

Fig. 23
eine perspektivische Teilinnenansicht eines Kraftfahrzeugs, das mit einer weiter abgewandelten Ausführungsform des Lüfterdachs ausgestattet ist,

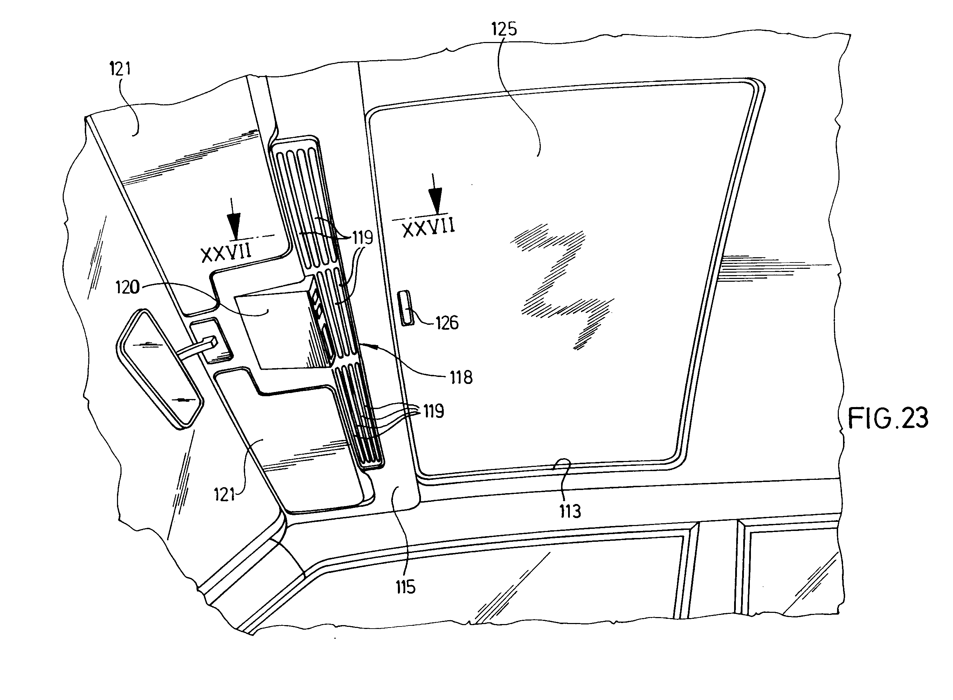

Fign. 24 bis 26
Längsschnitte durch das Lüfterdach gemäß Fig. 23 bei unterschiedlichen Deckelstellungen,

Fig. 27

in größerem Maßstab einen Schnitt entlang der Linie XXVII-XXVII der Fig. 23, sowie

Fign. 28 und 29

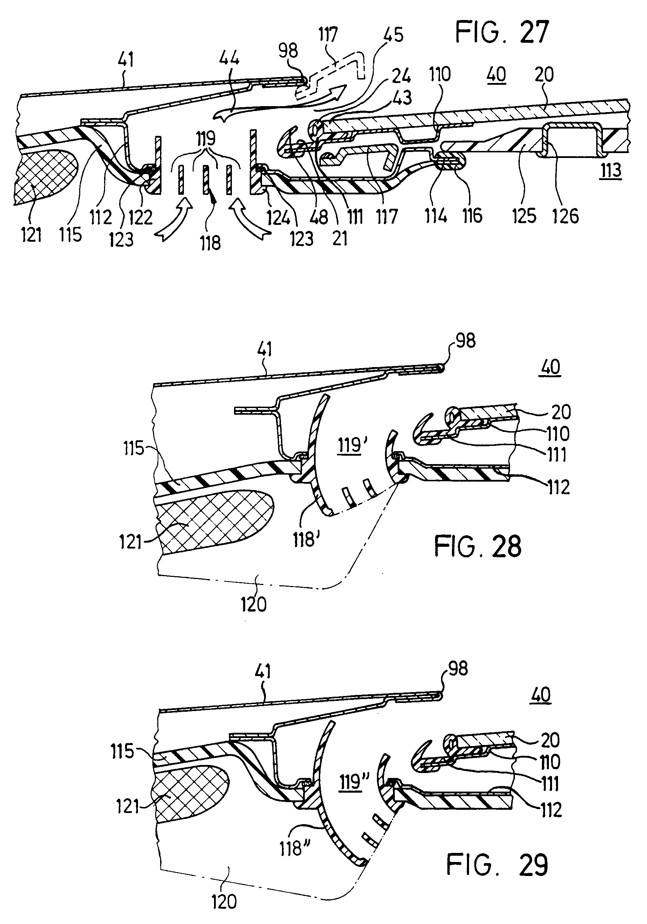

Schnitte entsprechend Fig. 27 für abgewandelte Ausführungsformen des Lüftungsgitters.

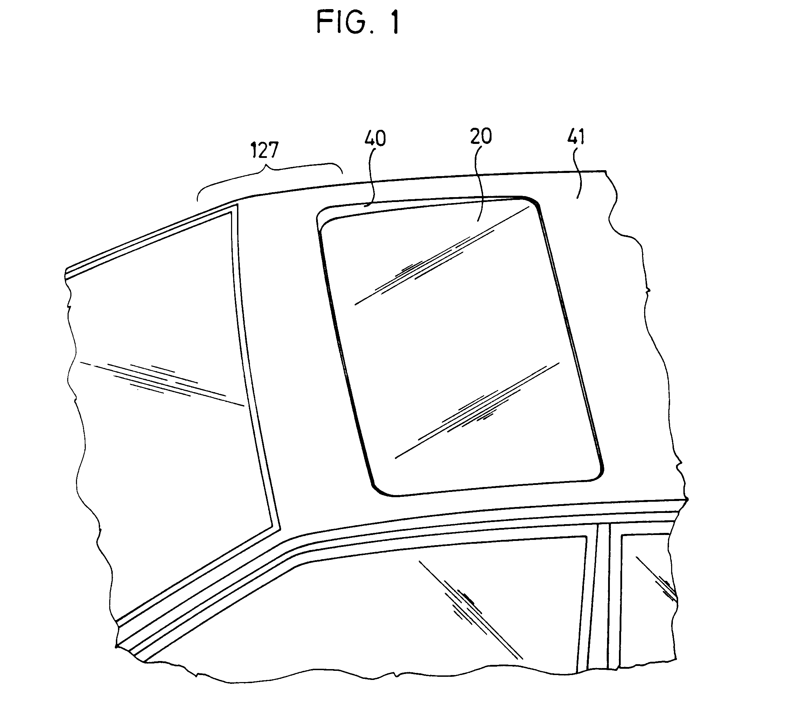

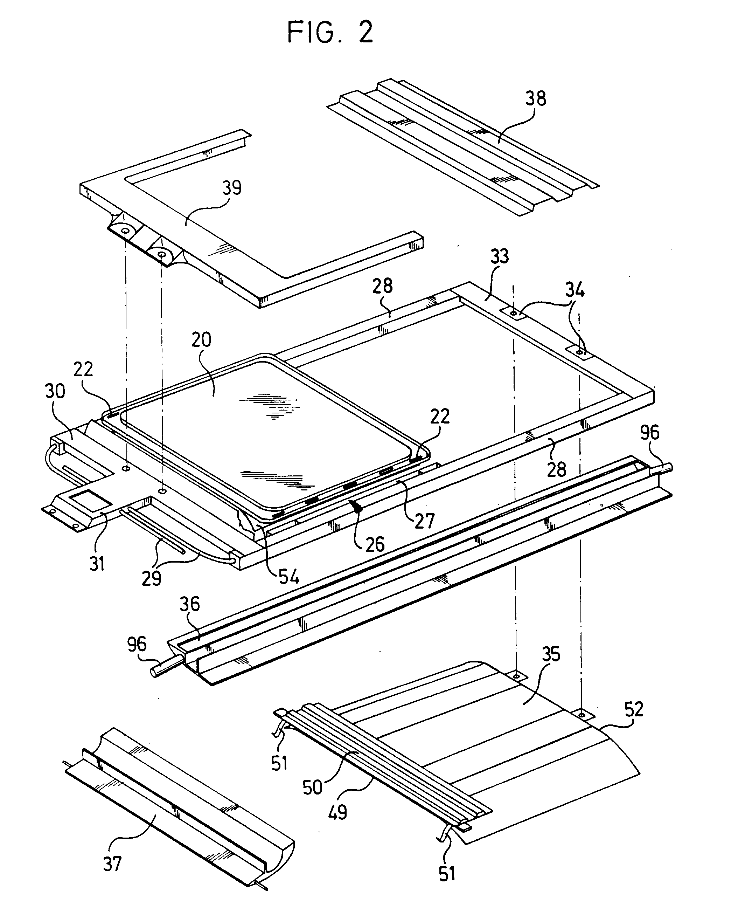

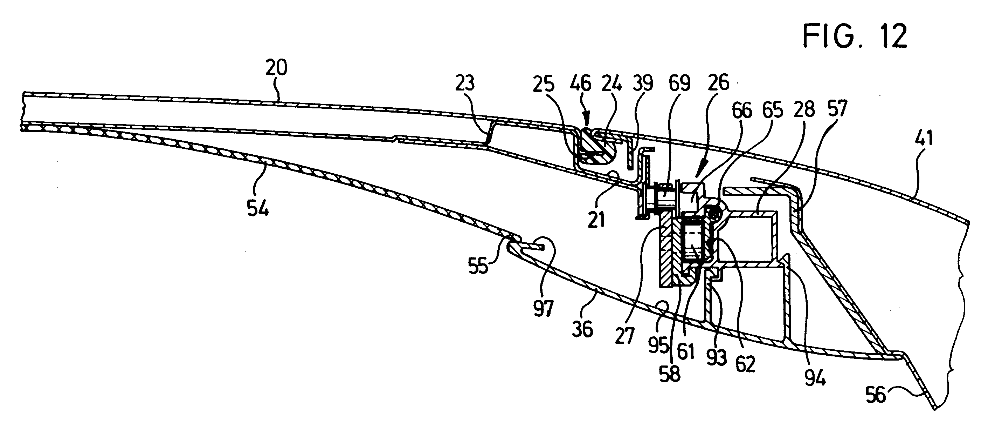

Entsprechend der schematischen Darstellung gemäß den Fign. 1 und 2 weist das veranschaulichte Eindeckel-Lüfter-Schiebedach einen einzigen Deckel 20 mit einer ringsumlaufenden, vorspringenden festen Wasserrinne 21 auf, die seitlich in der bei 22 angedeuteten Weise gelocht ist. Im Falle eines Blechdeckels kann die Wasserrinne 21 von einem Deckelinnenblech 23 gebildet sein (Fign. 12, 14, 15 und 17). Der Deckel 20 ist ferner mit einer ringsumlaufenden Dichtung 24 versehen, die im veranschaulichten Ausführungsbeispiel auf einen nach unten abgesetzten Randflansch 25 des Deckels 20 aufgeschoben ist. Der Deckel 20 ist mit einem Deckelverstellmechanismus 26 verbunden, zu dem auf beiden Dachseiten jeweils eine Kulisse 27 gehört. Die Kulissen 27 sind entlang dachfesten Führungsschienen 28 verschiebbar geführt. Zum Verstellen der Kulissen dient jeweils ein Antriebskabel 29. Die beiden Führungsschienen 28 sind in ihrem vorderen Bereich mittels einer Querstrebe 30 untereinander verbunden. Die Querstrebe 30 kann in ihrem mittleren Teil 31 einen Antriebsmotor 32 tragen, wie er in den Fign. 3 bis 6 schematisch angedeutet ist. Ein von dem Antriebsmotor 32 angetriebenes Ritzel steht mit den Antriebskabeln 29, bei denen es sich vorzugsweise um Gewindekabel handelt, in Eingriff. In ihrem hinteren Bereich sind die beiden Führungsschienen 28 mittels einer weiteren Querstrebe 33 untereinander verbunden, welche Scharniere 34 für einen verschwenkbaren starren Himmel 35 trägt. Die Begriffe "vorne" und "hinten" beziehen sich vorliegend auf die Vorwärtsfahrtrichtung des Kraftfahrzeuges, in welches das Dach eingebaut ist.

Zu dem Lüfter-Schiebedach gehören entsprechend Fig. 2 ferner zwei seitliche Blenden 36 (von denen in Fig. 2 nur die eine dargestellt ist), eine Verstärkungsschiene 38, ein Verstärkungswinkel 39 und eine vordere Blende 37.

Wie insbesondere aus Fig. 3 hervorgeht, kann mit dem Deckel 20 ein Dachausschnitt 40 verschlossen werden, der in einer festen Dachhaut 41 ausgebildet ist. Der Deckel 20 läßt sich mittels des Verstellmechanismus 26 um eine (gedachte) an oder nahe seiner Hinterkante 42 liegende Schwenkachse in eine Lüfterstellung gemäß den Fign. 1 und 4 schwenken, in welcher die Deckelvorderkante 43 unterhalb der Fläche der festen Dachhaut 41 liegt, während die Deckelhinterkante 42 mindestens näherungsweise in Dachhöhe gehalten wird. Wenn während der Fahrt des Fahrzeuges an der Außenseite der Dachhaut 41 ein Unterdruck gegenüber dem im Fahrgastraum herrschenden Druck entsteht, bildet sich ein Luftstrom aus, der in Fig. 4 bei 44 angedeutet ist. Das Wageninnere wird durch den Spalt 45 zwischen Deckelvorderkante und fester Dachhaut entlüftet.

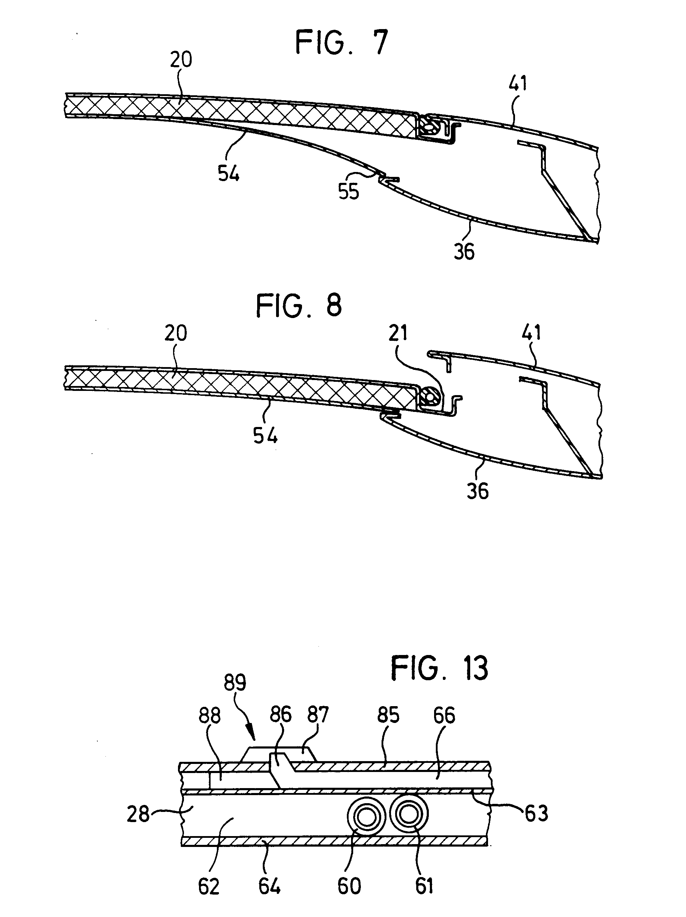

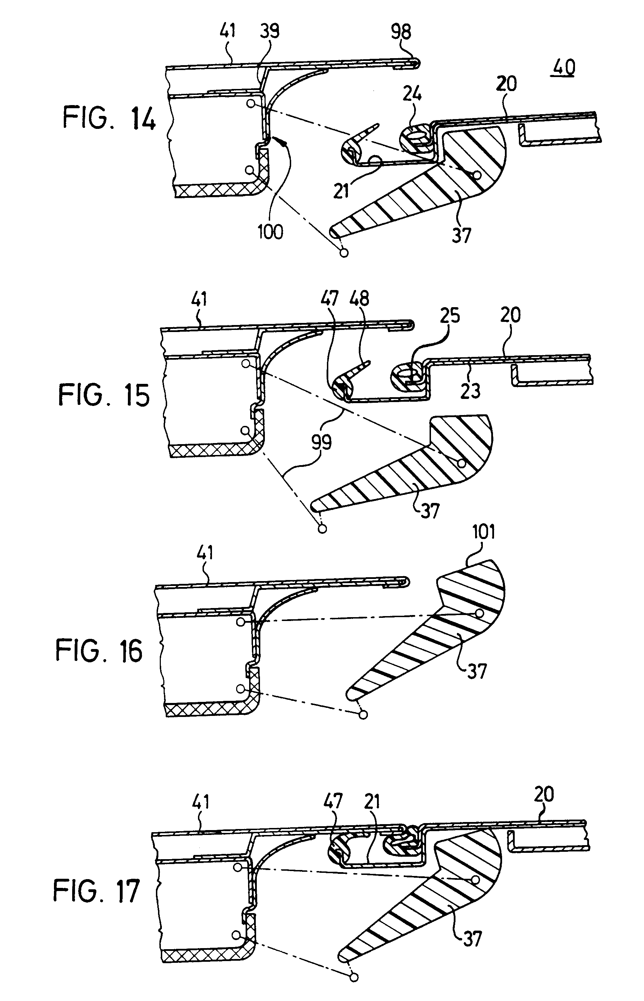

Der im vorderen Teil der festen Dachhaut 41 ausgebildete Dachausschnitt 40 läßt sich, falls erwünscht, mindestens teilweise freilegen, indem der Deckel 20 ausgehend von der Lüfterstellung gemäß Fig. 4 mit seiner Hinterkante 42 unter die Fläche der festen Dachhaut 41 um einen Betrag abgesenkt wird, der kleiner als die Absenkung der Deckelvorderkante 43 in der Lüfterstellung ist. Dabei wird gleichzeitig die zuvor in die Lüfterstellung abgesenkte Deckelvorderkante 43 in eine Zwischenstellung zwischen der Lüfterstellung (Fig. 4) und der Schließstellung (Fig. 3) angehoben. Der Deckel 20 wird auf diese Weise in eine Schiebestellung gebracht, in der er im wesentlichen parallel zu der Dachhaut 41 liegt (Fig. 5). Danach kann der Deckel 20 nach hinten in eine den Dachausschnitt 40 mindestens teilweise freigebende Offenstellung verschoben werden (Fig. 6). Wie aus Fig. 3 hervorgeht, untergreift die umlaufende feste Wasserrinne 21 des Deckels 20 in der Deckelschließstellung den Randspalt 46 zwischen dem Deckelaußenrand und dem Rand des Dachausschnittes 40. Die Dichtung 24 wird in der Deckelschließstellung nach oben gegen die feste Dachhaut 41 im Randbereich des Dachausschnittes 40 angepreßt. Dabei legt sich zusätzlich eine auf den Außenrand der Wasserrinne 21 aufgesetzte Dichtung 47 mit einer federnd nachgiebigen Nase 48 gegen die Unterseite der Dachhaut 41 an (vergleiche auch Fig. 17).

Der starre Himmel 35 liegt, wie aus den Fign. 3 bis 6 hervorgeht, unter dem an den Dachausschnitt 40 nach hinten angrenzenden Teil der festen Dachhaut 41. Er trägt an seinem vorderen Ende 49 eine querverlaufende Gleitfläche 50, an der auf beiden Seiten nach unten abstehende Federbeine 51 befestigt sind. Die Federbeine 51 stützen sich an einem dachfesten Teil ab und spannen den Himmel 35 im Bereich seines vorderen Endes 49 nach oben federnd vor. Auf diese Weise wird der Himmel 35 vorne gegen das hintere Ende des Deckels 20 bzw. den von diesem Ende nach hinten vorspringenden Teil der Wasserrinne 21 angedrückt, solange sich der Deckel 20 in der Schließstellung (Fig. 3) oder der Lüfterstellung (Fig. 4) befindet. Beim Absenken der Deckelhinterkante 42 in die Schiebestellung gemäß Fig. 5 wird der Himmel 35 von dem Deckel 20 vorne nach unten gedrückt und dadurch um die Scharniere 34 im Bereich seines hinteren Endes 52 verschwenkt. Dadurch wird zwischen dem hinteren Teil der Dachhaut 41 und dem Himmel 35 ein Raum 53 freigegeben, in welchen der Deckel 20 eingeschoben werden kann (Fig. 6).

An der Unterseite des Deckels 20 ist eine Deckelinnenverkleidung 54 angeordnet, die in ihrem in Querrichtung mittleren Bereich mit dem Deckel fest verbunden ist. Die Deckelinnenverkleidung 54 ist elastisch und steht von dem mittleren Verbindungsbereich mit dem Deckel seitlich ab. Die Deckelinnenverkleidung 54 drückt sich mit ihren Seitenrändern 55 gegen die seitlichen Blenden 36 federnd nachgiebig an, wie dies aus den Fign. 7, 8 und 12 hervorgeht.

Der Aufbau des Deckelverstellmechanismus auf der einen Seite des Daches ist im einzelnen in den Fign. 9 bis 12 dargestellt. Der Deckelverstellmechanismus auf der anderen Seite des Daches ist dazu spiegelsymmetrisch ausgebildet. Die Führungsschiene 28, bei der es sich vorzugsweise um ein Strangpreßprofil handelt, sitzt unterhalb eines Teils der festen Dachhaut 41, der gegenüber dem Dachausschnitt 40 seitlich nach außen versetzt ist. An einem mit einem Dachholm 56 verbundenen Anschlußblech 57 ist die Führungsschiene 28 in nicht näher dargestellter Weise höhenjustierbar befestigt. Die Kulisse 27 trägt an ihrer der Führungsschiene 28 zugewendeten Seite einen vorderen Rollenkäfig 58 und einen hinteren Rollenkäfig 59 für mit Bezug auf die Kulisse 27 drehbar gelagerte Führungsrollen 60 und 61. Die Führungsrollen 60 und 61 sind in einem in Fahrzeuglängsrichtung verlaufenden Führungskanal 62 der Führungsschiene 28 geführt, der von einem oberen Steg 63 und einem unteren Steg 64 begrenzt ist und der sich zu der Kulisse 27 hin öffnet. Die Führungsrollen 60 liegen, wie in Fig. 13 veranschaulicht ist, an dem unteren Steg 64, die Führungsrollen 61 an dem oberen Steg 63 an. Parallel zu dem Führungskanal 62 verlaufen in der Führungsschiene 28 ein Kabelkanal 65 und eine Laufbahn 66 für ein Arretierglied 67 einer weiter unten erläuterten Arretiervorrichtung 68. In dem Kabelkanal 65 ist jeweils eines der beiden Antriebskabel 29 längsverschiebbar geführt. Das Antriebskabel 29 ist mit mindestens einem der beiden Rollenkäfige 58, 59 fest verbunden, um bei seiner Verstellbewegung die Kulisse 27 entlang der Führungsschiene 28 zu bewegen. Der Deckel 20 ist mit der Kulisse 27 über einen vorderen und einen hinteren Dekkelanschlußbolzen 69 bzw. 70 verbunden. Die Deckelanschlußbolzen 69 und 70 stehen von der Außenseite der Wasserrinne 21 seitlich nach außen vor und greifen verschiebbar in eine vordere Kulissenbahn 71 bzw. eine hintere Kulissenbahn 72 der Kulisse 27 ein. Die vordere Kulissenbahn 71 weist zu dem Führungskanal 62 parallel verlaufende, relativ kurze Abschnitte 73, 74 und 75 auf. Die Abschnitte 73 und 74 sind über einen nach hinten und unten abfallenden Abschnitt 76 verbunden, während sich zwischen den Abschnitten 74 und 75 ein nach hinten ansteigender Abschnitt 77 erstreckt. Die hintere Kulissenbahn 72 umfaßt zu dem Führungskanal 62 parallel verlaufende Abschnitte 78, 79 und 80. Zwischen den Abschnitten 78 und 79 erstreckt sich ein nach hinten und oben ansteigender Abschnitt 81. Die Abschnitte 79 und 80 sind über einen Abschnitt 82 verbunden, der gleichfalls nach hinten und oben ansteigt, dessen Steigung jedoch kleiner als diejenige des Abschnitts 81 ist.

Durch Verschieben der Kulisse 27 gegenüber dem Deckel 20 werden der Hinterkante 42 und der Vorderkante 43 des Deckels die gewünschten Höhenverstellbewegungen gegenüber der festen Dachhaut 41 aufgezwungen. Bei der Ausführungsform gemäß den Fign. 9,10 und 11 sind die Kulissenbahnen 71 und 72 derart geformt, daß bei einem von der Deckelschließstellung gemäß Fig. 9 ausgehenden Zurückschieben der Kulisse 27 der Deckel 20 zunächst in die Lüfterstellung (Fig. 10) gebracht und dann mit seiner Hinterkante 42 abgesenkt wird, um bei weiterem Zurückschieben der Kulisse 27 von dieser unter die feste Dachhaut 41 mitgenommen zu werden. Die Arretierungsvorrichtung 68 hindert den Deckel während seiner Verschwenk- und Höhenverstellbewegungen an einer Verschiebebewegung gegenüber der festen Dachhaut 41. Sie gibt den Deckel 20 für ein Verschieben nach hinten erst frei, wenn die Deckelhinterkante 42 entsprechend Fig. 11 in die für die Deckelverschiebebewegung erforderliche Lage abgesenkt ist. Die Arretiervorrichtung 68 weist für diesen Zweck einen unter dem Deckel 20 angeordneten Arretierungshebel 83 auf, der um ein deckelfestes Gelenk 84 um eine zur Dachfläche parallele Achse schwenkbar ist und an seinem freien, nach vorne gerichteten Ende das Arretierglied 67 trägt. In einem die Laufbahn 66 nach oben begrenzenden Steg 85 der Führungsschiene 28 ist ein Arretierungsausschnitt 86 ausgebildet, der von einem auf die Führungsschiene 28 aufgesetzten Arretierungsteil 87 abgedeckt ist. In der Laufbahn 66 sitzt vor dem Arretierungsausschnitt 86 ein weiteres Arretierungsteil 88. Die Arretierungsteile 87 und 88 sowie der Arretierungsausschnitt 86 bilden eine insgesamt mit 89 bezeichnete dachfeste Arretierung. Mit dieser Arretierung 89 wird das Arretierglied 67 von einer Nockenfläche 90 an der Oberseite der Kulisse 27 in Eingriff gehalten, während der Deckel zwischen der Schließstellung und der Lüfterstellung verstellt wird und auch noch bis kurz vor Erreichen der in Fig. 11 dargestellten Deckellage.

In der Deckelschließstellung gemäß Fig. 9 befindet sich die Kulisse 27 in ihrer vorderen Endstellung. Die Deckelanschlußbolzen 69 und 70 befinden sich in den hinteren oberen Abschnitten 75 bzw. 80 der Kulissenbahnen 71 bzw. 72. Der Dekkel 20 wird mit seiner umlaufenden Dichtung 24 von unten gegen den Rand des Dachausschnittes 40 angepreßt. Werden mittels der Antriebskabel 29 die Kulissen 27 zu beiden Seiten des Daches nach hinten geschoben, wird der Deckel 20 durch das mittels der Nockenfläche 90 mit der Arretierung 89 in Eingriff gehaltene Arretierglied 67 an einer Verschiebebewegung gehindert. Es findet infolgedessen eine relative Längsbewegung zwischen der Kulisse 27 und dem Deckel 20 statt, im Verlauf deren die Deckelanschlußbolzen 69 und 70 in die an die Abschnitte 75 bzw. 80 nach vorne anschließenden geneigten Abschnitte 77 bzw. 82 der Kulissenbahnen 71 und 72 eintreten. Durch das Zusammenwirken zwischen dem deckelfesten vorderen Anschlußbolzen 69 und dem Kulissenbahnabschnitt 77 wird die Deckelvorderkante 43 nach unten gezogen und unter den vorderen Rand des Dachausschnittes 40 abgesenkt. Gleichzeitig wird durch kompensierendes Absenken des hinteren Dachanschlußbolzens 70 in dem Kulissenbahnabschnitt 82 die Deckelhinterkante 42 auf Dachhöhe gehalten. Der Lüftungsspalt 45 zwischen der Vorderkante des Dachausschnitts 40 und der Deckelvorderkante 43 wird ausgebildet und erreicht seinen Maximalwert, wenn die Kulisse 27 entsprechend Fig. 10 so weit zurückgeschoben ist, daß die Deckelanschlußbolzen 69 und 70 in den im wesentlichen waagrecht verlaufenden Abschnitten 74 bzw. 79 der Kulissenbahnen 71 und 72 stehen.

Es versteht sich, daß die Kulissen 27 zwecks Einstellung der Größe des Lüftungsspalts 45 auch in jeder beliebigen Zwischenstellung zwischen der Schließstellung nach Fig. 9 und der Lüfterstellung gemäß Fig.10 angehalten werden können. Bei weiterem Verstellen der Kulisse 27 nach hinten treten die Dekkelanschlußbolzen 69 und 70 in die gegensätzlich geneigten Abschnitte 76 bzw. 81 der Kulissenbahnen 71 und 72 ein. Die Vorderkante 43 des Deckels wird durch Zusammenwirken des vorderen Anschlußbolzens 69 mit dem Kulissenbahnabschnitt 76 in eine Zwischenstellung zwischen der Lüfterstellung und der Schließstellung angehoben, während gleichzeitig durch Zusammenwirken zwischen dem hinteren Anschlußbolzen 70 und dem Kulissenbahnabschnitt 81 die Deckelhinterkante 42 abgesenkt wird. Dabei hält die Nockenfläche 90 der Kulisse 27 das Arretierglied 67 weiter in Eingriff mit der dachfesten Arretierung 89. Erreichen bei weiterem Zurückschieben der Kulisse 27 die Dekkelanschlußbolzen 69,70 die vorderen Abschnitte 73 bzw. 78 der Kulissenbahnen 71 und 72, gibt eine Aussparung 91 der Nockenfläche 90 das Arretierglied 67 frei. Das Arretierglied 67 kann unter Schwenken des Arretierungshebels 83 um das Gelenk 84 über den Arretierungsausschnitt 86 nach unten in die Laufbahn 66 der Führungsschiene 28 eintreten. Durch Anschlag der vorderen Enden der Kulissenbahnen 71 und 72 an den Deckelanschlußbolzen 69 bzw. 70 kann der jetzt zu der Dachfläche und dem Führungskanal 62 im wesentlichen parallel stehende Deckel 20 von der Kulisse 27 nach hinten mitgenommen und unter den an den Dachausschnitt 40 nach hinten anschließenden Teil der festen Dachhaut 41 verschoben werden (vergleiche Fig. 6).

Wird umgekehrt ausgehend von der Offenstellung gemäß Fig. 6 die Kulisse 27 entlang der zugehörigen Führungsschiene 28 nach vorne geschoben, verhindert der Eingriff zwischen dem Arretierglied 67 und der Laufbahn 66 ein unerwünschtes Verschwenken des Deckels 20. Der Deckel 20 wird von der Kulisse 27 nach vorne mitgenommen, bis der Deckel 20 unter dem Dachausschnitt 40 liegt. Das Arretierglied 67 trifft auf das hintere Ende des Arretierungsteils 88 und wird von einer an die Nockenfläche 90 nach vorne anschließenden Nockenschräge 92 der Kulisse 27 nach oben durch den Arretierungsausschnitt 86 hindurchgeschoben und mit der Arretierung 89 in Eingriff gebracht. Der Deckel 20 wird dadurch gegen Verschiebebewegungen mit Bezug auf das feste Dach arretiert, während die Kulisse 27 für eine relative Verschiebebewegung gegenüber dem Deckel 20 freigegeben wird. Wird die Kulisse 27 nunmehr ausgehend von der Stellung gemäß Fig. 11 weiter nach vorne bewegt, laufen die vorstehend geschilderten Verstellvorgänge in umgekehrter Folge und Richtung ab, bis der Deckel 20 schließlich die Schließstellung gemäß Fig. 9 erreicht.

Die den Deckelverstellmechanismus 26 von unten abdeckende seitliche Blende 36 ist, wie aus Fig. 12 hervorgeht, über federnde Haken 93 und 94 an der Führungsschiene 28 angeclipst. Sie bildet eine die Seitenränder des Dachausschnittes 40 untergreifende Wasserrinne 95, welche auch das von der Wasserrinne 21 des Deckels 20 aufgefangene Wasser übernimmt und über Wasserabläufe 96 (Fig. 2) ableitet. Der Innenrand 97 der seitlichen Blende 36 steht mit dem Seitenrand 55 der elastischen Deckelinnenverkleidung 54 in Gleiteingriff.

Die im Bereich des vorderen Randes 98 des Dachausschnittes 40 beweglich gelagerte Blende 37 ist beispielsweise über ein in den Fign. 14 bis 17 schematisch dargestelltes Vier-Gelenk 99 mit einem dachfesten Teil, zweckmäßig der Querstrebe 30, verbunden und in nicht näher veranschaulichter Weise für eine Bewegung nach oben federnd vorgespannt. Vorzugsweise handelt es sich bei der vorderen Blende 37 um ein verstärktes Weichstoffteil, beispielsweise ein stahlblechverstärktes Polyurethan-Schaumteil. Die Blende 37 untergreift das vordere Ende des Deckels 20, wenn dieser in einer mit dem Dachausschnitt 40 ausgerichteten Stellung, so beispielsweise der Lüfterstellung nach Fig. 14 oder der Schließstellung gemäß Fig. 17, steht. Auf diese Weise sorgt die vordere Blende 37 nicht nur für einen harmonischen Übergang zwischen dem flachen Deckel 20 und einer von der Querstrebe 30 gebildeten, relativ hohen Konsole 100, sondern bei zurückgeschobenem Deckel 20 (Fig. 16) auch für einen den vorderen Rand 98 des Dachausschnittes 40 abdeckenden Prallschutz. In der voll hochgeschwenkten Lage der Blende 37 ragt eine in dieser Blendenstellung schräg nach hinten ansteigende Endfläche 101 der Blende über die Dachfläche vor und wirkt als Windabweiser (Fig. 16). Die Blendenverstellung kann mit Hilfe von Steuerkurven am Deckel 20 oder der Kulisse 27 erfolgen.

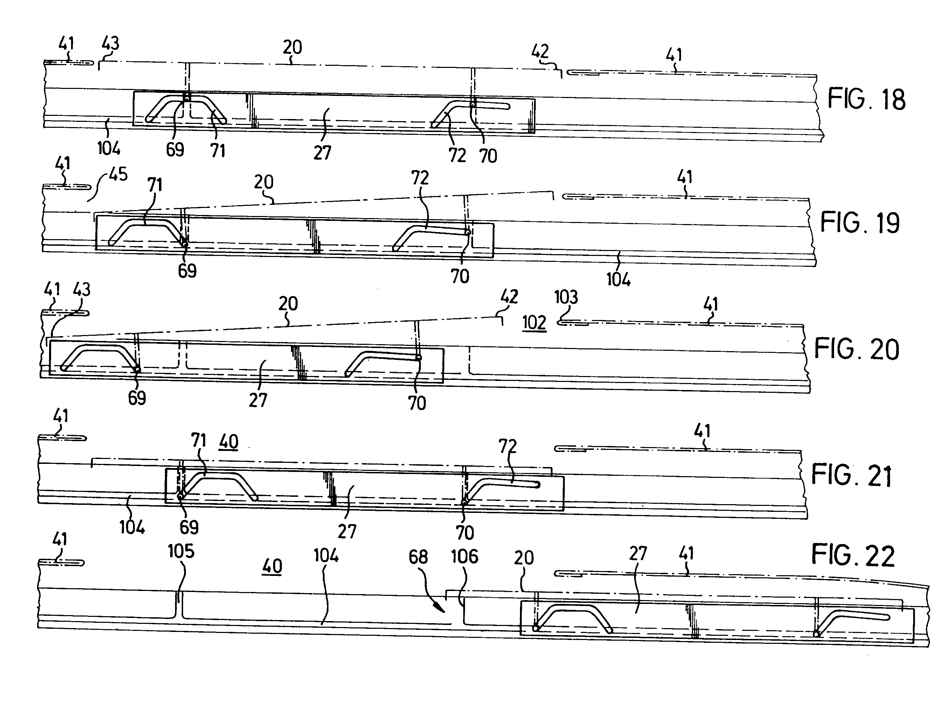

Die Fign. 18 bis 22 zeigen schematisch eine abgewandelte Ausführungsform des Eindeckel-Lüfter-Schiebedaches in unterschiedlichen Stellungen. Bei dieser Ausführungsform sind die Kulissenbahnen 71 und 72 der Kulisse 27 derart geformt, daß der Deckel bei einem von der Deckelschließstellung (Fig.18) ausgehenden Vorschieben der Kulisse 27 zunächst mit seiner Vorderkante 43 abgesenkt wird (Fig. 19 ). Über den Spalt 45 zwischen dem vorderen Rand des Dachausschnitts 40 und der Vorderkante 43 des Deckels 20 kann der Fahrzeuginnenraum gelüftet werden. Bei weiterem Vorschieben der Kulisse 27 entlang der Führungsschiene 28 wird der mit seiner Vorderkante 43 nach unten gekippte Deckel 20 durch Anlage der hinteren Enden der Kulissenbahnen 71 und 72 an den Deckelanschlußbolzen 69 bzw. 70 nach vorne mitgenommen, wobei der Deckel 20 mit seinem vorderen Ende unter den vor dem Dachausschnitt 40 liegenden Teil der festen Dachhaut 41 geschoben wird. Dadurch wird ein Lüftungsspalt 102 zwischen der auf Dachhöhe gehaltenen Hinterkante 42 des Deckels 20 und dem hinteren Rand 103 des Dachausschnittes 40 ausgebildet (Fig. 20). Beim Zurückschieben der Kulisse 27 wird der Deckel 20 in eine zur festen Dachfläche im wesentlichen parallele Stellung abgesenkt (Fig.21) und dann von der Kulisse 27 nach hinten unter den an den Dachausschnitt 40 anschließenden Teil der festen Dachhaut 41 mitgenommen (Fig. 22). Bei dieser Ausführungsform wird die insgesamt wiederum mit 68 bezeichnete Arretiervorrichtung von einer mit den Deckelanschlußbolzen 69 und 70 unmittelbar zusammenwirkenden dachfesten Laufbahn 104 gebildet, die vorzugsweise Teil der Führungsschiene 28 sein kann. In der Schließstellung (Fig. 18) sind die Deckelanschlußbolzen 69 und 70 aus der Laufbahn 104 nach oben ausgetreten und liegen an Arretierungen 105 bzw. 106 an, wodurch ein Verschieben des Deckels 20 verhindert wird. Wenn die Deckelvorderkante 43 abgesenkt wird, wandert der Deckelanschlußbolzen 69 entlang der Arretierung 105 nach unten, bis er in der Deckellüfterstellung in die Laufbahn 104 eintritt und dadurch der Deckel für eine Verschiebebewegung nach vorne freigegeben wird. Eine Deckelverschiebebewegung nach hinten wird in dieser Stellung durch Anlage des Deckelanschlußbolzens 70 an der hinteren Arretierung 106 verhindert. Wird der Deckel 20 dagegen in die Zwischenstellung gemäß Fig. 21 abgesenkt, kommen beide Bolzen 69 und 70 von den zugehörigen Arretierungen 105 bzw. 106 frei. Beide Bolzen 69 und 70 treten in die Laufbahn 104 ein und geben den Deckel 20 für ein Verschieben nach hinten frei.

Es versteht sich, daß im Rahmen der Erfindung zahlreiche Abwandlungen möglich sind. So kann statt der rings um den Deckel 20 laufenden Dichtung 24 nur eine vorspringende Dichtfläche vorgesehen sein, die in der Deckelschließstellung gegen eine an der Unterseite des Randes des Dachausschnittes 40 vorgesehene Dichtung von unten angepreßt wird. Wenn die Kopffreiheit nicht von entscheidender Rolle ist, kann statt eines absenkbaren Himmel 35 auch ein starr montierter Festhimmel vorgesehen sein, der zweckmäßig mit der Querstrebe 33 und/oder den Führungsschienen 28 verbunden ist. Ein solcher starr montierter Himmel kann gegebenenfalls auch die Querstrebe 33 ersetzen. Zur Maximierung der Kopffreiheit kann gegebenenfalls aber auch auf einen unterhalb des zurückgeschobenen Deckels 20 liegenden Himmel ganz verzichtet werden.

Bei der in den Fign. 23 bis 27 veranschaulichten, weiter abgewandelten Ausführungsform des Eindeckel-Lüfter-Schiebedaches ist der Deckel 20 aus durchscheinendem oder durchsichtigem Werkstoff gefertigt und auf einem umlaufenden Deckelträger 110 abgestützt. Auf einen vorstehenden Außenrand des Deckelträgers 110 ist ein Dichtungsprofil 111 aufgesetzt, das die den Deckel 20 umgreifende Hohlkammerdichtung 24, die sich in Deckelschließstellung gegen die Unterseite der Dachhaut 41 anlegende, federnd nachgiebige Nase 48 und dazwischen die Wasserrinne 21 bildet. Mit dem Deckel 20 kann der im vorderen Teil der festen Dachhaut 41 ausgebildete Dachausschnitt 40 wahlweise verschlossen oder mindestens teilweise freigelegt werden.

Unterhalb der festen Dachhaut 41 ist ein Dachrahmen 112 befestigt, in dem eine Öffnung 113 ausgebildet ist. Die Öffnung 113 liegt unterhalb des Dachausschnitts 40. Die Längsabmessung der Öffnung 113 ist kleiner als die Längsabmessung des Dachausschnitts 40, wobei der vordere Rand 114 der Öffnung 113 über den vorderen Rand 98 des Dachausschnitts 40 nach hinten vorragt. Der Dachrahmen 112 ist in seinem vorderen Teil von unten mittels eines festen Dachhimmels 115 abgedeckt. Der Dachhimmel 115 erstreckt sich nach hinten bis unter den vorderen Teil des in der Schließstellung befindlichen Deckels 20. Er untergreift dabei auch einen im Bereich des vorderen Randes 98 des Dachausschnittes 40 angeordneten Windabweiser 117, der in Abhängigkeit von der Deckelverschiebebewegung zwischen einer in Fig. 27 mit ausgezogenen Linien veranschaulichten Ruhestellung und einer mit gestrichelten Linien angedeuteten Arbeitsstellung verstellbar ist. Die Verstellmechanik des Windabweisers 117 ist nicht dargestellt. Sie kann beispielsweise so aufgebaut sein, wie dies oben für die Verstellmechanik der vorderen Blende 37 erläutert ist.

Der Dachrahmen 112 und der Dachhimmel 115 sind in einem vor dem vorderen Rand 98 des Dachausschnittes 40 und vor dem Windabweiser 117 liegenden Bereich mit zum Dachrahmenrand 114 parallel verlaufenden, miteinander fluchtenden Ausbrüchen versehen, in die ein langgestrecktes Lüftungsgitter 118 eingesetzt ist. Das Lüftungsgitter 118 bildet im veranschaulichten Ausführungsbeispiel (vergleiche insbesondere Fig. 23) drei in Fahrzeugquerrichtung aufeinanderfolgende Gruppen von je vier parallelen Lüftungskanälen 119, die im wesentlichen lotrecht verlaufen. Entsprechend Fig. 23 erstreckt sich das Lüftungsgitter 118 nahezu über die volle Breite der Dachrahmenöffnung 113. Das Lüftungsgitter 118 schließt dabei an eine unter dem Dachhimmel 115 sitzende Konsole 120 an, die beispielsweise eine Innenleuchte und/oder eine Leselampe oder dergleichen aufnimmt. Das Lüftungsgitter 118 und die Konsole 120 können einstückig miteinander verbunden sein. Die Konsole 120 liegt an der Dachunterseite zwischen den üblichen abklappbaren Sonnenblenden 121, und das Lüftungsgitter 118 befindet sich hinter den hochgeklappten Sonnenblenden 121, so daß letztere den Luftzutritt zu den Lüftungskanälen 119 nicht behindern. Die Oberseite eines ringsum vorspringenden Flansches 122 des Lüftungsgitters 118 ist, wie bei 123 angedeutet ist, mit der Unterseite des Dachrahmens 112 verklebt. Eine sich von dem Flansch 122 nach außen wegerstreckende Nase 124 des Lüftungsgitters 118 legt sich gegen den Rand des das Lüftungsgitter aufnehmenden Ausbruches des festen Dachhimmels 115 von unten an. Dadurch wird der Randspalt zwischen dem Lüftungsgitter und dem Dachhimmel abgedeckt, und der Dachhimmel wird in Eingriff mit dem Dachrahmen 112 gehalten.

Es ist ein Schiebehimmel 125 vorgesehen, der nahe seinem vorderen Ende eine Griffmulde 126 aufweist. Der Schiebehimmel 125 kann ausgehend von einer Schließstellung, in welcher er die Rahmenöffnung 113 abdeckt, über dem Dachrahmen 112 nach hinten in eine Offenstellung verschoben werden, in welcher er die Öffnung 113 mindestens teilweise freigibt.

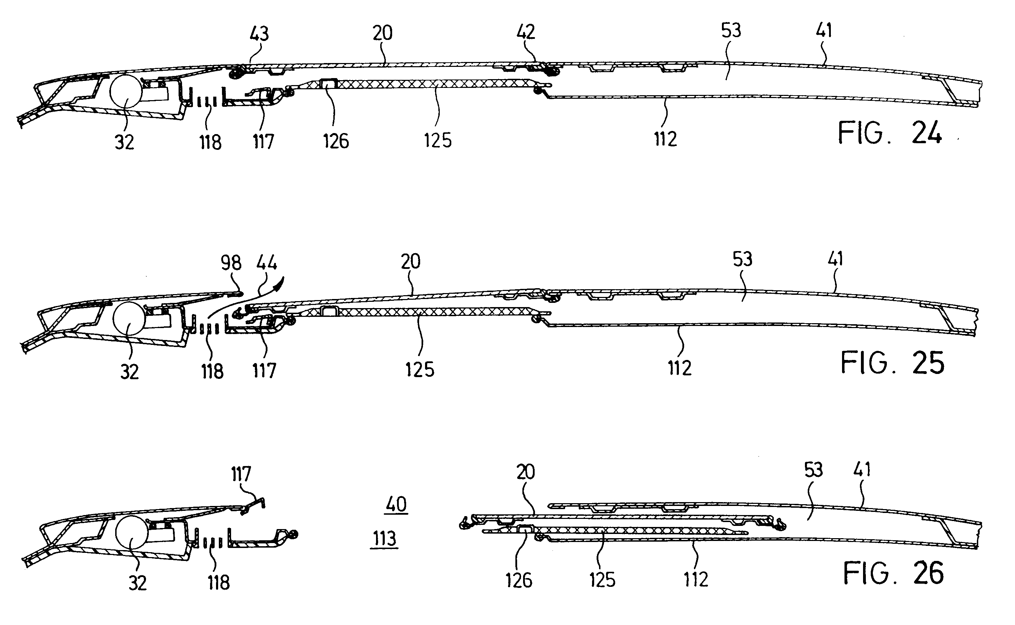

Der Deckel 20 läßt sich ausgehend von der Schließstellung gemäß Fig. 24 mittels eines Verstellmechanismus, der in der oben im einzelnen erläuterten Weise aufgebaut sein kann, um eine (gedachte) an oder nahe seiner Hinterkante 42 liegende Schwenkachse verschwenken. Dadurch läßt sich der Deckel 20 in eine Lüfterstellung gemäß den Fig. 1, 25 und 27 bringen, in welcher die Deckelvorderkante 43 unterhalb der Fläche der festen Dachhaut 41 liegt, während die Deckelhinterkante 42 mindestens näherungsweise in Dachhöhe gehalten wird. Wenn während der Fahrt des Fahrzeuges an der Außenseite der Dachhaut 41 im Bereich 127 ein Unterdruck gegenüber dem im Fahrgastraum herrschenden Druck entsteht, bildet sich ein in den Fign. 25 und 27 bei 44 angedeuteter Luftstrom aus. Das Wageninnere wird durch die Lüftungskanäle 119 und den Spalt 45 zwischen der Deckelvorderkante und der festen Dachhaut gezielt und wirkungsvoll entlüftet. Vom Fahrgastraum aus macht sich eine Verstellung des Deckels 20 zwischen der Schließstellung (Fig. 24) und der Lüfterstellung (Fig. 25) optisch nicht bemerkbar.

Der Dachausschnitt 40 läßt sich, falls erwünscht, mindestens teilweise freilegen, indem der Deckel 20 ausgehend von der Lüfterstellung gemäß Fig. 24 mit seiner Hinterkante 42 unter die Fläche der festen Dachhaut 41 abgesenkt und dann nach hinten in den von der Dachhaut 41 und dem Deckelrahmen 112 begrenzten Raum 53 geschoben wird. Dabei ist die Anordnung in an sich bekannter, nicht näher dargestellter Weise vorzugsweise so getroffen, daß der Deckel 20 beim Zurückschieben den Schiebehimmel 125 nach hinten mitnimmt. Der Schiebehimmel 125 wird gleichfalls in dem Raum 53 aufgenommen (Fig. 26). Falls erwünscht, kann der Schiebehimmel 125 aber auch bei in Schließstellung befindlichem Deckel 20 über die Griffmulde 126 unabhängig von dem Deckel 20 nach hinten geschoben werden. Wenn der Deckel 20 nach hinten bewegt wird, wird der Windabweiser 117 selbsttätig in seine Arbeitsstellung (Fig. 26) gebracht.

Die Fign. 28 und 29 zeigen zwei abgewandelte Ausführungsformen für das Lüftungsgitter 118' bzw. 118''. Die Lüftungsgitter 118' und 118'' bilden jeweils nach vorne konvex gekrümmte Lüftungskanäle 119' bzw. 119''. Im übrigen entsprechen Aufbau und Funktion des Lüfterdaches derjenigen gemäß den Fign. 23 bis 27.

Der Antriebsmotor 32, der einen Teil des Deckelverstellmechanismus bildet, ist in den Fign. 24 bis 26 schematisch angedeutet. Er sitzt vor dem Lüftungsgitter 118.

Während in den erläuterten Ausführungsbeispielen jeweils ein langgestrecktes Lüftungsgitter 118, 118' bzw. 118'' vorgesehen ist, versteht es sich, daß auch zwei oder mehr gesonderte Lüftungsgitter vorhanden sein können.

**Patentansprüche**

1.  Lüfterdach für Kraftfahrzeuge mit einem in einer festen Dachhaut (41) ausgebildeten Dachausschnitt (40), der mittels eines einzigen Dek-

kels (20) verschließbar ist, der durch Verschwenken um eine an oder nahe seiner Hinterkante (42) liegende Schwenkachse in eine Lüfterstellung schwenkbar ist, in welcher die Deckelvorderkante (43) in Abstand (45) unterhalb der festen Dachfläche (41) liegt, während die Deckelhinterkante (42) mindestens näherungsweise in Dachhöhe gehalten wird, **dadurch gekennzeichnet,** daß der Dachausschnitt (40) im vorderen Teil der festen Dachhaut (41) ausgebildet ist, sowie daß der Deckel (20) ausgehend von der Lüfterstellung mit seiner Hinterkante (42) unter die feste Dachfläche absenkbar und als Ganzes nach hinten unter die Dachhaut in eine den Dachausschnitt mindestens teilweise freigebende Offenstellung verschiebbar ist.

2. Lüfterdach nach Anspruch 1, dadurch gekennzeichnet, daß beim Absenken der Deckelhinterkante (42) die zuvor in die Lüfterstellung abgesenkte Dekkelvorderkante (43) in eine Zwischenstellung zwischen der Lüfterstellung und der Schließstellung angehoben wird.

3. Lüfterdach nach Anspruch 1 oder 2, dadurch gekennzeichnet, daß der Dekkel eine ringsum vorspringende feste Wasserrinne (21) trägt, die in der Deckelschließstellung den Randspalt (46) zwischen dem Deckelaußenrand und dem Rand des Dachausschnittes (40) untergreift.

4. Lüfterdach nach einem der vorhergehenden Ansprüche, dadurch gekennzeichnet, daß der Deckel (20) eine ringsumlaufende Dichtung (24) oder Dichtfläche aufweist, deren Außenabmessungen größer als die betreffenden Abmessungen des Dachausschnittes sind.

5. Lüfterdach nach Anspruch 4, dadurch gekennzeichnet, daß der Deckel (20) zur Abdichtung in der Schließstellung in lotrechter Richtung von unten gegen den Rand des Dachausschnittes (40) anpreßbar ist.

6. Lüfterdach nach einem der vorhergehenden Ansprüche, dadurch gekennzeichnet, daß unterhalb des an den Dachausschnitt (40) nach hinten angrenzenden Teils der festen Dachhaut (41) ein absenkbarer starrer Himmel (35) angeordnet ist.

7. Lüfterdach nach Anspruch 6, dadurch gekennzeichnet, daß der absenkbare starre Himmel (35) im Bereich seines hinteren Endes (52) mit einem dachfesten Teil (Querstrebe 33) schwenkbar verbunden und im Bereich seines vorderen Endes (49) derart nach oben federnd vorgespannt ist, daß er sich gegen den Deckel (20) in allen Deckelstellungen von unten federnd nachgiebig anlegt.

8. Lüfterdach nach einem der vorhergehenden Ansprüche, dadurch gekennzeichnet, daß der Deckel (20) mit einem Deckelverstellmechanismus (26) verbunden ist, der zu beiden Seiten des Dachausschnittes (40) unterhalb der festen Dachhaut (41) angeordnet ist.

9. Lüfterdach nach Anspruch 8, dadurch gekennzeichnet, daß der Deckelverstellmechanismus (26) auf beiden Dachseiten jeweils eine Kulisse (27) aufweist, und die Kulissen (27) in Fahrzeuglängsrichtung entlang dachfest angeordneten Führungsschienen (28) verschiebbar geführt und mit dem Deckel (20) jeweils über mindestens einen vorderen und einen hinteren Dekkelanschlußbolzen (69, 70) verbunden sind, die in Kulissenbahnen (71, 72) der Kulisse eingreifen.

10. Lüfterdach nach Anspruch 9, dadurch gekennzeichnet, daß die beiden Führungsschienen in ihrem vorderen Bereich mittels einer vorzugsweise zugleich als Windleitfläche dienenden Querstrebe (30) untereinander verbunden sind.

11. Lüfterdach nach Anspruch 7 und Anspruch 9 oder 10, dadurch gekennzeichnet, daß die beiden Führungsschienen (28) in ihrem hinteren Bereich mittels einer Querstrebe (33) untereinander verbunden sind, mit welcher der absenkbare starre Himmel (35) schwenkbar verbunden ist.

12. Lüfterdach nach einem der Ansprüche 9 bis 11, dadurch gekennzeichnet, daß die Kulissen (27) über jeweils ein Antriebskabel (29) mit einem gemeinsamen Antrieb (Antriebsmotor 32) verbunden sind.

13. Lüfterdach nach einem der Ansprüche 9 bis 12, dadurch gekennzeichnet, daß mit den Kulissen (27) drehbar gelagerte Führungsrollen (60, 61) verbunden sind, die in einem in Fahrzeuglängsrichtung verlaufenden Führungskanal (62) der betreffenden Führungsschiene (28) geführt sind.

14. Lüfterdach nach einem der Ansprüche 9 bis 13, dadurch gekennzeichnet, daß die Kulissenbahnen (71, 72) derart geformt sind, daß bei einem von der Deckelschließstellung ausgehenden Zurückschieben der Kulissen (27) der Deckel (20) zunächst in die Lüfterstellung gebracht und dann mit seiner Hinterkante (42) abgesenkt und nach hinten mitgenommen wird.

15. Lüfterdach nach einem der Ansprüche 1 bis 13, dadurch gekennzeichnet, daß der Deckel (20) nach Absenken seiner Vorderkante (43) mit seinem vorderen Ende unter den vor dem Dachausschnitt (40) liegenden Teil der festen Dachhaut (41) schiebbar ist.

16. Lüfterdach nach einem der Ansprüche 9 bis 13 und Anspruch 15, dadurch gekennzeichnet, daß die Kulissenbahnen (71, 72) derart geformt sind, daß der Deckel (20) bei einem von der Deckelschließstellung ausgehenden Vorschieben der Kulissen (27) zunächst mit seiner Vorderkante (43) abgesenkt und dann nach vorne mitgenommen sowie bei einem von der Deckelschließstellung ausgehenden Zurückschieben der Kulissen mit Vorder- und Hinterkante (43, 42) abgesenkt und dann nach hinten mitgenommen wird.

17. Lüfterdach nach einem der vorhergehenden Ansprüche, gekennzeichnet durch eine Arretiervorrichtung (68), welche den Deckel (20) während des Verschwenkens an einer Verschiebebewegung hindert und für ein Verschieben nach hinten erst freigibt, wenn die Deckelhinterkante (42) in die für diese Verschiebebewegung erforderliche Lage abgesenkt ist.

18. Lüfterdach nach Anspruch 17, dadurch gekennzeichnet, daß die Arretiervorrichtung (68) mindestens einen an der einen Deckelseite angelenkten Arretierungshebel (83) mit einem Arretierglied (67) aufweist, das von der auf der betreffenden Deckelseite angeordneten Kulisse (27) mit einer dachfesten Arretierung (89) in Eingriff gehalten wird, bis die Deckelhinterkante (42) in die für die Deckelverschiebebewegung erforderliche Lage abgesenkt ist.

19. Lüfterdach nach Anspruch 18, dadurch gekennzeichnet, daß die Führungsschiene (28) mit einer sich in Längsrichtung der Führungsschiene erstreckenden Laufbahn (66) für das Arretierglied (67) versehen ist, und daß die Kulisse (27) das Arretierglied für einen Übertritt in die Laufbahn (66) freigibt, wenn die Deckelhinterkante in die für die Deckelverschiebebewegung erforderliche Lage abgesenkt ist.

20. Lüfterdach nach einem der Ansprüche 8 bis 19, gekennzeichnet durch seitliche Blenden (36), welche den zu beiden Seiten des Dachausschnittes (40) angeordneten Deckelverstellmechanismus (26) von unten abdecken.

21. Lüfterdach nach Ansprüchen 3 und 20, dadurch gekennzeichnet, daß die seitlichen Blenden (36) zugleich Wasserrinnen (94) bilden, welche die seitlichen Teile der ringsumlaufenden Wasserrinne (21) des Deckels (20) untergreifen und mit Wasserabläufen (96) versehen sind.

22. Lüfterdach nach Anspruch 20 oder 21, dadurch gekennzeichnet, daß die seitlichen Blenden (36) an die Führungsschienen (28) angeclipst sind.

23. Lüfterdach nach einem der Ansprüche 20 bis 22, dadurch gekennzeichnet, daß die seitlichen Blenden (36) mit Einbuchtungen für einen Handgriff und/oder eine Innenraumleuchte versehen sind.

24. Lüfterdach nach einem der Ansprüche 20 bis 23, dadurch gekennzeichnet, daß die Innenränder (97) der seitlichen Blenden (36) mit der Unterseite des Deckels oder einer Deckelinnenverkleidung (54) in nachgiebigem Eingriff stehen.

25. Lüfterdach nach einem der vorhergehenden Ansprüche, dadurch gekennzeichnet, daß an der Unterseite des Deckels (20) eine mittig mit dem Dekkel fest verbundene, seitlich abstehende, elastische Deckelinnenverkleidung (54) angeordnet ist, die gegen dachfeste seitliche Verkleidungsteile (seitliche Blenden 36) federnd nachgiebig angedrückt ist.

26. Lüfterdach nach einem der vorhergehenden Ansprüche, dadurch gekennzeichnet, daß im Bereich des vorderen Randes (98) des Dachausschnittes (40) eine beweglich gelagerte vordere Blende (37) angeordnet ist, die das vordere Ende des Deckels (20) untergreift, wenn der Deckel in einer mit dem Dachausschnitt (40) ausgerichteten Stellung steht.

27. Lüfterdach nach Anspruch 26, dadurch gekennzeichnet, daß die vordere Blende (37) bei zurückgeschobenem Deckel (20) in eine Windabweiserstellung übergeht.

28. Lüfterdach nach Anspruch 26 oder 27, dadurch gekennzeichnet, daß die vordere Blende (37) nach oben federnd vorgespannt ist.

29. Lüfterdach nach einem der Ansprüche 26 bis 28, dadurch gekennzeichnet, daß die vordere Blende (37) zugleich als Prallschutz ausgebildet ist.

**30.** Lüfterdach nach einem der Ansprüche 9 bis 29, dadurch gekennzeichnet, daß die Führungsschienen (28) aus Strangpreßprofilen gefertigt sind.

**31.** Lüfterdach nach einem der vorhergehenden Ansprüche, dadurch gekennzeichnet, daß ein fester Dachhimmel (115) vorgesehen ist, der die feste Dachhaut (41) mindestens in einem vor dem Dachausschnitt (40) liegenden Bereich untergreift, und der sich im Bereich des vorderen Randes (98) des Dachausschnittes (40) nach hinten bis unter den vorderen Teil des in der Schließstellung befindlichen Deckels (20) erstreckt sowie mit mindestens einem Lüftungsgitter (118, 118′, 118″) versehen ist.

**32.** Lüfterdach nach einem der Ansprüche 1 bis 25 und 31, dadurch gekennzeichnet, daß im Bereich des vorderen Randes (98) des Dachausschnittes (40) ein Windabweiser (117) angeordnet ist, der in Abhängigkeit von der Deckelverschiebebewegung zwischen einer Ruhe- und einer Arbeitsstellung verstellbar ist, und daß der feste Dachhimmel (115) auch den Windabweiser (117) untergreift.

**33.** Lüfterdach nach Anspruch 31 oder 32, dadurch gekennzeichnet, daß das Lüftungsgitter (118, 118′, 118″) in dem Teil des festen Dachhimmels (115) sitzt, welcher den vor dem vorderen Rand (98) des Dachausschnittes (40) befindlichen Teil der festen Dachhaut (41) untergreift.

**34.** Lüfterdach nach Ansprüchen 32 und 33, dadurch gekennzeichnet, daß das Lüftungsgitter (118, 118′, 118″) vor dem Windabweiser (117) angeordnet ist.

**35.** Lüfterdach nach einem der Ansprüche 31 bis 34, dadurch gekennzeichnet, daß das Lüftungsgitter 8118) mindestens einen im wesentlichen lotrecht verlaufenden Luftführungskanal (119) bildet.

**36.** Lüfterdach nach einem der Ansprüche 31 bis 34, dadurch gekennzeichnet, daß das Lüftungsgitter (118′, 118″) mindestens einen nach vorne konvex gekrümmten Luftführungskanal (119′, 119″) bildet.

**37.** Lüfterdach nach einem der Ansprüche 31 bis 36, dadurch gekennzeichnet, daß das Lüftungsgitter (118, 118′, 118″) parallel zum vorderen Rand (98) des Dachausschnittes (40) über eine Strecke verläuft, die mindestens 75 % der Breite des Dachausschnittes entspricht.

**38.** Lüfterdach nach einem der vorhergehenden Ansprüche, dadurch gekennzeichnet, daß der Deckel (20) aus durchsichtigem oder durchscheinendem Werkstoff besteht, und daß ein Schiebehimmel (125) vorgesehen ist, der unterhalb des Deckels (20) ausgehend von einer Schließstellung, in welcher er eine unterhalb des Dachausschnittes (40) liegende Öffnung (113) eines Dachrahmens (112) abdeckt, nach hinten in eine Offenstellung verschiebbar ist, in welcher er diese Öffnung mindestens teilweise freigibt.

**Claims**

**1.** A ventilator roof for motor vehicles with a roof opening (40) made in a fixed roof skin (41) and which can be closed by means of a single cover (20) which is adapted to be swung by pivoting about a pivoting axis disposed at or near its rear edge (42), into a ventilating position in which the front edge (43) of the cover is at a distance (45) below the fixed roof surface (41), while the rear edge (42) of the cover is maintained at least approximately at the height of the roof, characterised in that the roof opening (41) is constructed in the forward part of the fixed roof skin (41) and in that the cover (20), starting from the ventilation position, can be lowered so that its rear edge (42) moves under the fixed roof surface and can be displaced in its entirety rearwardly and underneath the roof skin into an open position which at least partially opens the roof opening.

**2.** A ventilator roof according to Claim 1, characterised in that upon lowering of the rear edge (42) of the cover the leading edge (43) of the cover which will have previously been lowered into the ventilation position is raised into an intermediate position between the ventilation position and the closed position.

**3.** A ventilator roof according to Claim 1 or 2, characterised in that the cover carries a fixed gutter (21) projecting outwards from all sides of the said cover and which in the closed position of the cover extends under the edge gap (46) defined between the outside edge of the cover and the edge of the roof opening (40).

**4.** A ventilator roof according to one of the preceding Claims, characterised in that the cover (20) comprises, extending all around it, a seal (24) or sealing surface the dimensions of which are greater than the relevant dimensions of the roof opening.

**5.** A ventilator roof according to Claim 4, characterised in that for sealing in the closed position, the cover (20) is adapted to be pressed vertically from below against the edge of the roof opening (40).

**6.** A ventilator roof according to one of the preceding Claims, characterised in that a lowerable rigid headlining panel (35) is disposed under that part of the fixed roof skin (41) which is adjacent the rear of the roof opening (40).

**7.** A ventilator roof according to Claim 6, characterised in that the lowerable rigid headlining panel (35) is in the region of its rear edge (52) pivotally connected to a part (cross-strut 33) which is rigid with the roof and is in the region of its front end (49) so elastically pre-tensioned upwardly that in all positions of the cover it bears in elastically resilient manner against the cover (20).

**8.** A ventilator roof according to one of the preceding Claims, characterised in that the cover (20) is connected to a cover adjusting mechanism (26) which is disposed under the fixed roof skin (41), on both sides of the roof opening (40).

**9.** A ventilator roof according to Claim 8, characterised in that the cover adjusting mechanism (26) has on both sides of the roof a connecting member (27), the connecting members (27) being guided for displacement in the longitudinal direction of the vehicle along guide rails (28) which are rigid with the roof and connected to the cover (20) via in each case one front and one rear cover connecting bolt (69, 70) the bolts engaging tracks (71, 72) of the said connecting members.

**10.** A ventilator roof according to Claim 9, characterised in that the two guide rails are in their front portions connected to each other by a cross-strut (30) which preferably serves at the same time as a wind deflector.

**11.** A ventilator roof according to Claim 7 and Claim 8 or 10, characterised in that the two guide rails (28) are connected to each other in their rear portion by means of a cross-strut (33) to which the lowerable rigid headlining panel (35) is pivotally connected.

**12.** A ventilator roof according to one of Claims 9 to 11, characterised in that the connecting members (27) are via respective drive cables (29) connected to a common drive (driving motor 32).

**13.** A ventilator roof according to one of Claims 9 to 12, characterised in that rotatably mounted guide rollers (60, 61) are connected to the connecting members (27) which are guided in a guide channel (66) in the respective guide rail (28) extending in the longitudinal direction of the vehicle.

**14.** A ventilator roof according to one of Claims 9 to 13, characterised in that the connecting member tracks (71, 72) are so formed that upon the connecting members (27) being pushed back from the closed position of the cover the cover (20) is initially moved into the ventilation position and then has its rear edge (42) lowered and is entrained rearwardly.

**15.** A ventilator roof according to one of Claims 1 to 13, characterised in that after its leading edge (43) has been lowered, the leading edge of the cover (20) can be pushed under that part of the fixed roof skin (41) which is disposed in front of the roof opening (40).

**16.** A ventilator roof according to one of Claims 9 to 13 and Claim 15, characterised in that the connecting member tracks (71, 72) are so formed that upon a forwards movement of the connecting members (27), starting from the closed position of the cover, the cover (20) first has its leading edge (43) lowered and is then moved forwards just as in a case where the connecting members are pushed backwards from the closed position of the cover, the leading and rear edges (43, 42) are lowered and then the cover is entrained rearwardly.

**17.** A ventilator roof according to one of the preceding Claims, characterised by a stopping device (68) which prevents the cover (20) from performing displacement during pivoting, releasing the cover for a rearwards displacement only when the rear edge (42) of the cover has been lowered into the position required for this displacement.

**18.** A ventilator roof according to Claim 17, characterised in that the stopping device (68) comprises at least one locking lever (83) articulated on one side of the cover and having a locking member (67) which is maintained in engagement with a stop (89) rigid with the roof, by the connecting member (27) disposed on the relevant side of the cover, until the rear edge (42) of the cover has been lowered into the position necessary for displacement of the cover.

**19.** A ventilator roof according to Claim 18, characterised in that the guide rail (28) is provided with a track (44) for the locking member (67) and extending in the longitudinal direction of the guide rail and in that the connecting member (27) releases the locking member so that it can pass into the track (66) when the rear edge of the cover has been lowered into the position required for a displacement of the cover.

**20.** A ventilator roof according to one of Claims 8 to 19, characterised by lateral shields (36) which, from below, cover the cover adjusting mechanism (26) which is disposed on both sides of the roof opening (40).

**21.** A ventilator roof according to Claims 3 and 20, characterised in that the lateral shields (36) at the same time form water gutters (94) which are provided with water drains (96) and engage under the lateral parts of the encircling gutter (21) on the cover (20).

**22.** A ventilator roof according to Claim 20 or 21, characterised in that the lateral shields (36) are clipped onto the guide rails (28).

**23.** A ventilator roof according to one of Claims 20 to 22, characterised in that the lateral shields (36) are provided with depressions for a handle and/or an interior light.

**24.** A ventilator roof according to one of Claims 20 to 23, characterised in that the inner edges (97) of the lateral shields (36) are in resilient engagement with the underside of the cover or an inner lining (54) of the cover.

**25.** A ventilator roof according to one of the preceding Claims, characterised in that on the underside of the cover (20) there is, rigidly connected to the centre of the cover a laterally projecting resilient inner lining (54) of the cover which is pressed in elastically resilient fashion against lateral lining parts (lateral shields 36) which are rigid with the roof.

**26.** A ventilator roof according to one of the preceding Claims, characterised in that there is in the region of the front edge (98) of the roof opening (40) a movably mounted front shield (37) which engages under the front end of the cover (20) when the cover is in a position in which it is aligned with the roof opening (40).

**27.** A ventilator roof according to Claim 26, characterised in that the front shield (37) moves into a wind deflecting position when the cover (20) is pushed back.

**28.** A ventilator roof according to Claim 26 or 27, characterised in that the front shield (37) is resiliently pre-tensioned upwardly.

**29.** A ventilator roof according to one of Claims 26 to 28, characterised in that the front shield (37) is at the same time constructed as an impact shield.

**30.** A ventilator roof according to one of the Claims 9 to 29, characterised in that the guide rails (28) are produced as extruded sections.

**31.** A ventilator roof according to one of the preceding Claims, characterised in that a fixed headlining panel (115) is provided which engages under the fixed roof skin (41) at least in an area situated in front of the roof opening (40) and in the region of the front edge (98) of the roof opening (40) extends rearwardly to underneath the front part of the cover (20) which is in the closed position, and is provided with at least one ventilation grille (118, 118', 118").

**32.** A ventilator roof according to one of Claims 1 to 25 and 31, characterised in that in the region of the front edge (98) of the roof opening (40) there is a wind deflector (117) which according to the displacement of the cover, can be adjusted between an inoperative and a working position and in that the fixed headlining panel (115) also engages under the wind deflector (117).

**33.** A ventilator roof according to Claim 31 or 32, characterised in that the ventilation grille (118, 118', 118") is seated in the part of the fixed headlining panel (115) which engages beneath that part of the fixed roof skin (41) which is disposed in front of the front edge (98) of the roof opening (40).

**34.** A ventilator roof according to Claims 32 and 33, characterised in that the ventilation grille (118, 118', 118") is disposed in front of the wind deflector (117).

**35.** A ventilator roof according to one of Claims 31 to 34, characterised in that the ventilation grille (118) forms at least one substantially vertically extending air duct (119).

**36.** A ventilator roof according to one of Claims 31 to 34, characterised in that the ventilation grille (118', 118") forms at least one forwardly convexly curved air duct (119', 119").

37. A ventilator roof according to one of Claims 31 to 36, characterised in that the ventilation grille (118, 118', 118") extends parallel with the leading edge (98) of the roof opening (40) over a distance which corresponds to at least 75% of the width of the roof opening.

38. A ventilator roof according to one of the preceding Claims, characterised in that the cover (20) consists of transparent or translucent material and in that a sliding roof headliner (125) is provided which, from a closed position in which it covers in the roof frame (112) an opening (113) under the roof opening (40), is displaceable under the cover (20) rearwardly into an open position in which it at least partially exposes this opening.

**Revendications**

1. Toit d'aération pour véhicules automobiles, comportant une découpe (40) pratiquée dans un toit rigide (41), cette découpe pouvant être obturée par un panneau coulissant unique (20) qui, par basculement autour d'un axe situé sur ou, près de son bord postérieur (42) peut venir en position d'aération, dans laquelle le bord antérieur (43) du panneau se trouve à une certaine distance en-dessous du toit rigide (41), tandis que le bord postérieur (42) est maintenu au moins approximativement au niveau du toit, toit d'aération caractérisé en ce que la découpe (40) est pratiquée dans la partie avant du toit rigide (41) et que le panneau (20), à partir de la position d'aération, peut être abaissé par son bord postérieur (42) en-dessous du toit rigide et reculé en bloc sous le toit, pour venir en une position d'ouverture découvrant au moins partiellement l'ouverture du toit.

2. Toit d'aération selon la revendication 1, caractérisé en ce que l'abaissement du bord postérieur (42) du panneau, produit le relèvement en une position intermédiaire entre la position d'aération et la position de fermeture, du bord postérieur (43) du panneau, qui avait été abaissé antérieurement en position d'aération.

3. Toit d'aération selon la revendication 1 ou 2, caractérisé en ce que le panneau porte à sa périphérie une gouttière débordante (21) qui, en position de fermeture est engagée sous la fente (46) séparant le bord extérieur du panneau et le bord de la découpe (40).

4. Toit d'aération selon l'une des revendications précédentes, caractérisé en ce que le panneau (20) comporte une garniture périphérique d'étanchéité (24) ou une plaque d'étanchéité dont les dimensions extérieures sont supérieures à celles de la découpe du toit.

5. Toit d'aération selon la revendication 4, caractérisé en ce que le panneau (20), pour assurer l'étanchéité en position de fermeture peut être appliqué par une pression verticale de bas en haut contre le bord de la découpe (40).

6. Toit d'aération selon l'une des revendications précédentes, caractérisé en ce qu'un habillage rigide (35) pouvant s'abaisser est disposé sous la partie du toit rigide (41) située en arrière de l'ouverture (40).

7. Toit d'aération selon la revendication 6, caractérisé en ce que l'habillage abaissable (35), dans la zone de son extrémité arrière (52) peut basculer autour d'une articulation portée par une partie fixe du toit (traverse 33) tandis que, dans la zone de son extrémité avant (49), il est soumis à une tension élastique dirigée vers le haut de telle sorte que dans toutes les positions du panneau, il s'appuie de manière flexible et élastique contre le panneau (20).

8. Toit d'aération selon l'une des revendications précédentes, caractérisé en ce que le panneau (20) est relié à un mécanisme de manoeuvre (26) disposé des deux côtés de l'ouverture (40), sous le toit rigide (41).

9. Toit d'aération selon la revendication 8, caractérisé en ce que le mécanisme de manoeuvre (26) présente, sur chacun des deux côtés du toit, une coulisse (27), les coulisses (27) d'une part pouvant se déplacer dans le sens du déplacement du véhicule le long de deux rails de guidage (28), d'autre part étant reliés au panneau (20) chacune par au moins deux goujons de liaison, un avant (69) et un arrière (70) qui sont engagés dans des pistes (71, 72) de la coulisse.

10. Toit d'aération selon la revendication 9, caractérisé en ce que les deux rails de guidage sont reliés entre eux, dans leur zone avant, par une traverse (30) servant avantageusement également de déflecteur d'air.

11. Toit d'aération selon les revendications 7 et 9 ou 10, caractérisé en ce que les deux rails de guidage (28) sont reliés entre eux, dans leur zone arrière par une traverse (33) à laquelle est relié par une articulation de basculement, l'habillage rigide abaissable (35).

12. Toit d'aération selon l'une des revendications 9 à 11, caractérisé en ce que les coulisses (27) sont reliées chacune par un câble d'entraînement (29) à un organe commun d'entraînement (moteur 32).

13. Toit d'aération selon l'une des revendications 9 à 12, caractérisé en ce que des galets de roulement (60, 61) tournants sont montés sur les coulisses (27) et peuvent se déplacer dans un canal de guidage (62), disposé selon la direction longitudinale du véhicule, dans le rail de guidage (28) correspondant.

14. Toit d'aération selon l'une des revendications 9 à 13, caractérisé en ce que les pistes de coulisse (71, 72) ont une forme telle qu'à partir de la position de fermeture, le recul des coulisses (27) amène le panneau (20) en position d'aération d'abord, puis provoque l'abaissement de son bord arrière (42) et enfin son entraînement vers l'arrière.

15. Toit d'aération selon l'une des revendications 1 à 13, caractérisé en ce que le panneau (20) après abaissement de son bord avant (43) peut coulisser par son extrémité avant sous la partie du toit rigide (41) située en avant de la découpe (40).

16. Toit d'aération selon l'une des revendications 9 à 13 et selon la revendication 15, caractérisé en ce que les pistes de coulisse (71, 72) ont une forme telle que le panneau (20), sous l'effet d'un déplacement vers l'avant des coulisses (27), à partir de la position de fermeture du panneau, tout d'abord s'abaisse par son bord antérieur (43), puis est entraîné vers l'avant, tandis qu'un recul des coulisses, à partir de la position de fermeture, abaisse le panneau par ses deux bords (42, 43) , puis l'entraîne en arrière.

17. Toit d'aération selon l'une des revendications précédentes, caractérisé en ce qu'il comporte un dispositif d'arrêt (68) qui empêche le panneau (20) de coulisser pendant son mouvement d'inclinaison et qui n'autorise son recul qu'après que le bord postérieur (42) ait atteint par abaissement la position nécessaire à l'exécution du coulissement.

18. Toit d'aération selon la revendication 17, caractérisé en ce que le dispositif d'arrêt (68) présente au moins un levier de blocage (83) articulé sur un côté de panneau, avec un organe d'arrêt (67) qui vient en prise par la coulisse (27) disposée sur le côté correspondant au panneau avec un dispositif d'arrêt (89) fixé au toit, jusdqu'à ce que le bord arrière (42) du toit soit abaissé dans la position nécessaire au mouvement de déplacement du toit.

19. Toit d'aération selon la revendication 18, caractérisé en ce que le rail de guidage (28) est pourvu d'une voie de circulation (66) s'étendant dans le sens longitudinal du rail de guidage pour l'organe d'arrêt (67) et en ce que la coulisse (27) libère l'organe d'arrêt pour un passage dans la voie de circulation (66), quand le bord intérieur du panneau est abaissé dans la position nécessaire pour le mouvement de coulissement du panneau.

20. Toit d'aération selon l'une des revendications 8 à 19, caractérisé en ce que des caches latéraux (36) disposés des deux côtés de la découpe (40) recouvrent par dessous le mécanisme de manoeuvre (26).

21. Toit d'aération selon les revendications 3 et 20, caractérisé en ce que les caches latéraux (36) constituent également des gouttières (94) qui sont engagées sous les parties latérales de la gouttière périphérique (21) du panneau (20) et comportent des évacuations d'eau (46).

22. Toit d'aération selon la revendication 20 ou 21, caractérisé en ce que les caches latéraux (36) sont fixés par clips sur les rails de guidage (28).

23. Toit d'aération selon l'une des revendications 20 à 22, caractérisé en ce que les caches latéraux (36) sont munis d'échancrures permettant de monter une poignée ou une lampe d'éclairage de l'habitacle.

24. Toit d'aération selon l'une des revendications 20 à 23, caractérisé en ce que les bords intérieurs (97) des caches latéraux (36) sont en appui flexible sur la face inférieure du panneau ou d'un revêtement interne (54) de celui-ci

25. Toit d'aération selon l'une des revendications précédentes, caractérisé en ce que la face inférieure du panneau (20) est munie d'un revêtement interne élastique (54) solidaire du panneau dans sa partie centrale, mais dépassant latéralement, qui s'appuie par flexibilité élastique contre les parties latérales du revêtement du toit (caches latéraux 36).

**26.** Toit d'aération selon l'une des revendications précédentes, caractérisé en ce que dans la zone du bord avant (98) de l'ouverture (40) est disposé un cache antérieur (37) mobile qui recouvre par dessous l'extrémité avant du panneau (20), lorsque celui-ci est dans une position alignée avec la découpe (40) du toit.

**27.** Toit d'aération selon la revendication 26, caractérisé en ce que le cache antérieur (37), lorsque le panneau (20) est reculé, se met en position de déflecteur.

**28.** Toit d'aération selon la revendication 26 ou 27, caractérisé en ce que le cache antérieur (37) est sous tension élastique vers le haut.

**29.** Toit d'aération selon l'une des revendications 26 à 28, caractérisé en ce que le cache antérieur (37) est conçu également comme une protection contre les chocs.

**30.** Toit d'aération selon l'une des revendications 9 à 29, caractérisé en ce que les rails de guidage (28) sont réalisés à partir de profilés étirés.

**31.** Toit d'aération selon l'une des revendications précédentes, caractérisé en ce qu'il est prévu un habillage de toit fixe (115), s'étendant sous le toit fixe (41) au moins dans une zone située en avant de la découpe (40) et qui, dans la zone du bord avant (98) de la découpe (40) s'étend vers l'arrière jusqu'en-dessous de la partie avant du panneau (20) en position de fermeture en même temps qu'il comporte une grille d'aération (118, 118', 118").

**32.** Toit d'aération selon l'une des revendications 1 à 25 et 31, caractérisé en ce que dans la zone du bord avant (98) de la découpe (40), il est prévu un déflecteur d'air (117) qui, en fonction du coulissement du panneau peut se déplacer entre une position de repos et une position de travail, l'habillage fixe (115) s'étendant également sous le déflecteur.

**33.** Toit d'aération selon la revendication 31 ou 32, caractérisé en ce que la grille d'aération (118, 118', 118") se trouve dans la zone de l'habillage fixe (115) qui englobe par dessous la partie du toit rigide (41) située en avant du bord antérieur (98) de l'ouverture (40).

**34.** Toit d'aération selon les revendications 32 et 33, caractérisé en ce que la grille d'aération (118, 118', 118") est disposée en avant du déflecteur d'air (117).

**35.** Toit d'aération selon l'une des revendications 31 à 34, caractérisé en ce que la grille d'aération (118) comporte au moins un canal de guidage d'air (119) orienté sensiblement verticalement.

**36.** Toit d'aération selon l'une des revendications 31 à 34, caractérisé en ce que la grille d'aération (118', 118") comporte au moins un canal de guidage d'air (119', 119") de forme courbe, convexe vers l'avant.

**37.** Toit d'aération selon l'une des revendications 31 à 36, caractérisé en ce que la grille d'aération (118, 118', 118") s'étend parallèlement au bord antérieur (98) de la découpe (40) sur au moins 75 % de la largeur de celle-ci.

**38.** Toit d'aération selon l'une des revendications précédentes, caractérisé en ce que le panneau (20) est réalisé en un matériau transparent ou translucide et qu'il est prévu un habillage coulissant (125) sous le panneau (20) qui, à partir de sa position de fermeture dans laquelle il recouvre l'ouverture (113) d'un cadre (112) disposé sous la découpe de toit (40), peut être, par recul, amené dans une position d'ouverture qui découvre au moins partiellement cette ouverture (113).

FIG. 1

# FIG. 2

FIG. 3

FIG. 4

FIG. 5

FIG. 6

EP 0 331 910 B1

## FIG. 7

## FIG. 8

## FIG. 13

FIG. 9

FIG. 10

FIG. 11

EP 0 331 910 B1

FIG. 12

EP 0 331 910 B1

FIG. 14

FIG. 15

FIG. 16

FIG. 17

FIG. 18

FIG. 19

FIG. 20

FIG. 21

FIG. 22

EP 0 331 910 B1

FIG.23

43    20    42    53    41

32    118    117    126    125    112    FIG. 24

98  44    20    53    41

32    118    117    125    112    FIG. 25

117    40    20    53    41
      113

32    118    126    125    112    FIG. 26

EP 0 331 910 B1

FIG. 27

FIG. 28

FIG. 29